# EUROPEAN PATENT SPECIFICATION

(11) **EP 1 421 420 B1**
(45) Date of publication and mention of the grant of the patent: **17.01.2007**
(21) Application number: 02769962.8
(22) Date of filing: 30.08.2002
(51) Int. Cl.: G02B 6/02

(54) **Optical Fibre with high numerical aperture**
OPTISCHE FASERN MIT HOHER NUMERISCHER APERTUR
Fibre optique à grande ouverture numérique

(30) Priority: 30.08.2001 DK 200101286; 16.11.2001 DK 200101710; 06.12.2001 DK 200101815; 06.12.2001 US 336136 P; 31.01.2002 DK 200200158; 04.02.2002 US 353236 P; 22.02.2002 DK 200200285
(43) Date of publication of application: 26.05.2004
(60) Divisional application: 06112433.5
(73) Proprietor: Crystal Fibre A/S, 3460 Birkerod (DK)
(72) Inventor: BROENG, Jes, DK-3460 Birkerod (DK); BJARKLEV, Anders, DK-4000 Roskilde (DK); LIBORI, Stig, Eigil, Barkou, DK-2860 Soeborg (DK); FOLKENBERG, Jacob, Riis, DK-2980 Kokkedal (DK); VIENNE, Guillaume, DK-1620 Koebenhavn V (DK)
(74) Representative: Hegner, Anette
(86) International application number: PCT/DK2002/000568
(87) International publication number: WO 2003/019257

(56) References cited:
- WO-A-01/37008
- WO-A-01/42829
- US-A- 5 802 236
- US-A- 5 907 652

## Description

### 1. BACKGROUND OF THE INVENTION

The present invention relates to electromagnetic waveguides, especially optical fibres having high numerical aperture, such as multimode optical fibres for high-power delivery and optical fibres, having rare-earth dopants in core and/or cladding region(s) and having waveguiding properties designed for high-power amplification and/or lasing, and use thereof.

### THE TECHNICAL FIELD

Over the past few years, cladding pumped fibre lasers and amplifiers have become basic tools in research laboratories. In contrast to conventional optical fibres, which comprise a region of relatively high refractive index - the core - surrounded by a region of relatively low refractive index - the cladding, cladding pumped (or double-clad) fibres consist of a high-index core, surrounded by a region of intermediate refractive index, which in turn is surrounded by a region (typically polymer) of low refractive index that does play a role in light guiding. Double clad fibres for instance find use in high-power (cladding pumped) lasers and amplifiers. In such components, pump light from low brightness sources, such as diode arrays, is easily coupled into the inner cladding of double clad fibre due to the inner cladding's large cross sectional area and high numerical aperture. As the multimode pump light crosses the core, it is absorbed by the rare earth dopant, and in order to increase the overlap of the pump light with the core, the inner cladding is often made non-circular. It is important at this point to note that one of the problems of using circular inner-claddings is the possible excitation of so-called skew rays, which may be envisioned as optical rays of a spiral like shape, i.e., rays that do not overlap strongly with the core region, and, therefore, do not efficiently pump the rare-earth materials located in the core. The idea behind such double clad designs is described in recent textbooks (e.g., by Becker, Olsson, and Simpson, "Erbium-Doped Fiber Amplifiers, Fundamentals and Technology", Academic Press, 1999, ISBN 0-12-084590-3). However, as it is also described by Becker et al., the inner cladding is often a glass cladding surrounded by a low index polymer second cladding, which allows the inner cladding to become a guiding structure. Pump light is launched from the fibre end into the undoped cladding, propagating in a multimode fashion and interacting with the doped core as it travels along the fibre.

In an evaluation of high power fibre laser, Becker et al. describes that a rectangular shape for the multimode section (the inner cladding) is preferred for efficient coupling of radiation to the inner single-mode core, and matches well the geometric aspect ratio of diode laser pumps. The output of fibre lasers of this type is constrained to be single mode by the single mode fibre core, hence the name brightness converters (from large area multimode to single mode) is often given to these devices.

High-power fibre lasers are often used to replace solid-state lasers, since well-designed fibre lasers offer excellent thermal properties, reliability, simplicity, and compactness (as described by Hodzynski et al. in paper CWA49 of Technical Digest of CLEO'2001, May 6-11, 2001, Baltimore, MD, USA). Cladding pumped lasers and amplifiers find applications not only in telecommunications as high-power erbium-doped fibre amplifiers (EDFAs) and Raman amplifiers, but also in more traditional applications such as narrow band and single frequency pump sources for optical parametric generators and non-linear frequency converters. Also applications such as free space optical communication links, high peak power laser sources are required, and as described by Valley et al. in paper CWA51 of the Technical Digest of CLEO'2001, May 6-11, 2001, Baltimore, MD, USA, a potential candidate is the high-power, cladding pumped, Yb-doped fibre amplifier with a pulse-position-modulated seed oscillator. These principles will also be valid for fibres doped with other rare-earth ions, for operation at other wavelengths. An interesting possibility is described by Söderlund et al. in IEEE Photonics Technology Letters, Vol.13, No.1, Jan.2001, pp.22-24, in which the amplified spontaneous emission (ASE) is described in cladding pumped long-wavelength band erbium-doped fibre amplifiers. It is here shown that with cladding pumping, directional effects of pumping are much reduced by increasing the cladding area. In effect, large cladding area results in more uniform pump power distribution along the fibre length, preventing build-up of short-wavelength gain and ASE power.

Recently a new type of optical fibre that is characterized by a so-called microstructure has been proposed. Optical fibres of this type (which are referred to by several names - as e.g. micro-structured fibres, photonic crystal fibre, holey fibre, and photonic bandgap fibres) have been described in a number of references, such as WO 99/64903, WO 99/64904, and Broeng et al (see Pure and Applied Optics, pp.477-482, 1999) describing such fibres having claddings defining Photonic Band Gap (PBG) structures, and US patent no. 5,802,236, Knight et al. (see J. Opt. Soc. Am. A, Vol. 15, No. 3, pp. 748-752, 1998), Monro et al. (see Optics Letters, Vol.25 (4), p.206-8, February 2000) defining fibres where the light is transmitted using modified Total Internal Reflection (TIR). This application covers fibres that are mainly guiding by TIR. Micro-structured fibres are known to exhibit waveguiding properties that are unattainable using conventional fibres.

In order to increase the amount of pump light that can be coupled into the fibre, D.J.DiGiovanni and R.S.Windeler has described a new air-clad fibre design in United States Patent No. 5,907,652. DiGiovanni et al. discloses a cladding-pumped optical fibre structure that facilitates improved coupling of pump radiation into the fibre. Another aspect of the fibres disclosed by DiGiovanni et al. is to optically isolate the inner cladding from the outer structure in order to avoid recoating induced changes in optical properties of fibre Bragg gratings written in the fibre by ultra-violet (UV) light. The fibres according to the description of DiGiovanni et al. have increased numerical aperture (NA) resulting from provision of a cladding region having substantially lower effective refractive index than was found in the prior art. This was achieved by making the first outer cladding region substantially an air-clad region.

The application of microstructured fibres - or photonic crystal fibres - in connection with ytterbium-doping has been suggested and reported by W.J. Wadsworth et al. in IEE Electronics Letters, Vol.36, pp.1452-1453, 2000. Furthermore, the issue of high-power levels giving rise to undesired non-linearities or physical damage has been addressed very recently by W.J. Wadsworth et al. in paper CWC1 of the Technical Digest of CLEO'2001, May 6-11, 2001, Baltimore, MD, USA. The approach of W.J.Wadsworth et al. is to combine the single-mode and large-mode area properties of photonic crystal fibres with ytterbium co-doping. Moreover, it is pointed out by Wadsworth et al. that care must be taken that any doped regions within the PCF do not themselves form waveguides. To avoid this the core of the presented ytterbium-doped fibre has been microstructured into 425 doped regions with diameters of less that 250 nm each - hereby forming an effective index medium with an area filling fraction of the doped glass of a few percent resulting in an effective step, which is insufficient for strong guidance. Wadsworth et al. furthermore mentions the potential of this technology to scale to even larger cores, high output powers and for efficient cladding pumping from diode laser arrays using high-numerical-aperture double-clad microstructures.

In a recent publication by Doya, Legrand, and Mortessagne, (Optics Letters, Vol.26, No.12, June 15, 2001, pp.872-874) an optimised absorption of pump power is described for a fibre with a D-shaped inner cladding. Doya et al. uses a ray trajectory in the transverse section of the D-shaped fibre inner cladding to argue a well distributed pump distribution (avoiding the previously mentioned skew rays).

Russell et al. in WO 0142829 describe microstructured fibres for use as lasers for example as cladding pumped devices. The fibres describes by Russell et al. are characterized by a micro-structured inner cladding having a large (more than 10) number of low-index features that are arranged in a periodic manner. The inner cladding region of the fibres describes by Russell et al. are further characterized by a symmetric outer shape - as for example a circular or rectangular shape.

In order to achieve a high NA, DiGiovanni et al. in United States Patent No. 5,907,652 describe that the first outer cladding region (also named the air-clad) should "...to a large extend be empty space, with a relatively small portion (typically <50%, preferably <25%) of the first outer cladding region being a support structure (the "web") that fixes the second outer cladding region relative to the inner cladding region." As shall be demonstrated under the detailed description of the present invention, the present inventors have, however, realised that it is not necessarily sufficient to have an air-clad region with a large air filling fraction for the fiber to exhibit a high NA of the inner cladding. In fact, the present inventors have realized that it is necessary to have the "web" designed in a specific manner that relates to the thickness of the threads of the "web" compared to the optical wavelength of light guided in the inner cladding in order to achieve a high NA.

It is a disadvantage of the fibres described by DiGiovanni et al. in United States Patent No. 5,907,652 that the "web" has not been optimized for a high NA.

It is a further disadvantage of the fibres described by DiGiovanni et al. in United States Patent No. 5,907,652 that the cross-section of the inner-cladding in the shown examples are substantially circular. This may lead to the appearance of skew rays of the pump, and result in non-optimal pumping of the core region.

It is a further disadvantage of the fibres described by DiGiovanni at al. in United States Patent No. 5,907,652 that the inner cladding is not microstructured, i.e., control of the effective refractive index of the inner cladding has not been described, or moreover the use of specific placements of air-holes or voids in the inner cladding has not been explored.

It is a disadvantage of the Yb-codoped fibres reported by W.J. Wadsworth et al. in IEE Electronics Letters, Vol. 36, pp.1452-1453, 2000 that they do not treat the issue of pump power distribution in multimode regions such as it is generally used in double clad fibres for high power applications.

It is a disadvantage of the D-shaped fibres described by Doya et al. that the advantages of microstructuring have not been used. It is a further disadvantage that the D-shaped fibre design require significant complexity in preform treatment (often involving long time-polishing), which may result in fibre glass defects.

It is a disadvantage of the fibres presented by Russell et al. that the shape of the inner cladding region is symmetric. It may be a further disadvantage that the fibres presented by Russell et al. have a large number of low-index features in the inner cladding region, as these will act to lower the NA of modes in the inner cladding compared to inner cladding features having none or a low number of low index features (less than 10). It may be a further disadvantage of the fibres presented by Russell et al. that the low-index features of the inner cladding region are periodically arranged. The present inventors have realised that non-periodic arrangement of features in the inner cladding region may provide a more efficient coupling between cladding modes and mode(s) guided in the fibre core.

### 2. DISCLOSURE OF THE INVENTION

### Object of the Invention

It is the object of the present invention to provide a new class of optical waveguides, for which improved coupling into cladding pumped optical fibres may be obtained through optimal designs of micro-structured outer cladding regions that provide high NA for mode(s) of an inner cladding region.

It is a further object of the present invention to provide a new class of optical waveguides, in which improved efficiency of cladding pumped optical fibres may be obtained through optimal design of micro-structured inner cladding regions. Hereby, a more dynamical design of effective index - and a higher degree of flexibility concerning a given spatial pump distribution - is possible.

It is a further object of the present invention to provide new and improved cladding pumped devices in which the mode propagation properties of the photonic bandgap effect may be combined with a microstructured inner cladding for high power amplification and lasing

It is still a further object of the present invention to provide improved fibre laser and amplifiers, which

combines the feasibility of accurate spatial mode control of microstructured optical fibres with multimode pumping properties, and optimal placement of the active medium, e.g., the rare-earth-doped material.

### Solution according to the Invention

The present inventors have realised that the use of low index cladding features with a relatively narrow area between neighbouring low-index features may be required in order to realise cladding pumped fibre amplifiers and lasers with a high NA of a fibre structure guiding a number of inner, cladding modes. The present inventors have realised an important relation between width of the above-mentioned areas and the optical wavelength of inner, cladding modes. The high NA of fibres, which may be obtained in fibres according to the present invention, provides advantages with respect to efficient coupling of light from laser sources into the fibres. The high NA may further provide advantages with respect to efficient transfer of energy from cladding modes in an inner cladding to mode(s) of the core.

The optical fiber of the invention is as defined in the claims. The optical fiber of the invention comprises at least one core surrounded by an inner cladding region and a first outer cladding region, the first outer cladding region being surrounded by a second outer cladding region, the first outer cladding region in the cross-section comprising a number of first outer cladding features having a lower refractive index than the material surrounding the first outer cladding features, wherein for a plurality of said first outer cladding features, the minimum distance between two nearest neighbouring first outer cladding features is smaller than 1 µm. Here, the core may be surrounded by an outer cladding, the outer cladding comprising the first and the second outer cladding regions with the first outer cladding region arranged between the core and the second outer cladding region.

The inner cladding region being capable of acting as a reservoir for light generated in the core.

For the present invention, the minimum distance between two nearest neighbouring outer cladding features is meant to be the minimum distance between the outer boundaries of two nearest neighbouring cladding features.

It should be understood that when looking at a fibre of a given length, the cross-sectional dimensions of the fibre may vary along the length of the fibre. Thus, the present invention covers articles having a fibre, which in at least one cross-sectional area along the fibre length is given by one or more of the herein described embodiments. Here, the at least one cross-sectional area may represent an end surface of the fibre. It is also within a preferred embodiment that the at least one cross-sectional area represents a largest cross-sectional area along the fibre length.

According to a preferred embodiment of the invention, the fibre may be dimensioned so that the cross-sectional area of the fibre has a variation along the fibre length, which is not higher than 15% or not higher than 10%.

According to an embodiment of the present invention, the first outer cladding region in the cross section may have an inner diameter or inner cross-sectional dimension being larger than or equal to 15 µm. Here, the inner diameter or inner cross-sectional dimension of the first outer cladding region may be larger than or equal to 20 µm. Preferably, the inner diameter or inner cross-sectional dimension of the first outer cladding region is in the range from 80-125µm or in the range from 125-350µm.

In one embodiment of the present invention the optical fiber comprises at least one further outer cladding regions comprising a further outer cladding background material, and surrounding said first outer cladding region.

The present invention also relates to an optical fibre in combination with a pump radiation source, wherein for a plurality of said first outer cladding features, two nearest neighbouring first outer cladding features have a minimum distance smaller than the wavelength of the cladding pump light.

The optical fiber of the invention may be produced by a method comprising the steps:
(a) providing a preform, said preform comprising:
   (i) one centre preform element for providing a core region of the optical fibre, said center preform element comprising at least one element selected from the group consisting of rods, tubes, or combinations thereof;
   (ii) a plurality of inner cladding preform elements for providing an inner cladding region of the optical fibre, said inner cladding preform elements comprising at least one element selected from the group consisting of rods, tubes, or combinations thereof;
   (iii) a plurality of first outer cladding preform elements for providing a first outer cladding region of the optical fibre, said first outer cladding preform elements comprising a plurality of elements selected from the group consisting of rods, tubes, or combinations thereof;
   (iv) optionally a plurality of further outer cladding preform elements for providing at least one further outer cladding region of the optical fibre, said further outer cladding preform elements comprising a plurality of elements selected from the group consisting of rods, tubes, or combinations thereof; and
   (v) an overcladding preform element for providing an outer diameter of the optical fibre, said overcladding preform element comprising an element in form of a tube; and
(b) drawing said preform into a fibre;
wherein said first outer cladding preform elements are arranged to provide a minimum distance between two neighbouring first outer cladding elements of the optical fibre which is smaller than the wavelength of said light of at least one predetermined wavelength to be transmitted in the optical fibre.

Preferred embodiments are disclosed in the claims and further discussed hereinbelow.

The present invention also covers an embodiment in which the second outer cladding region is part of an outer cladding, which further comprises third and fourth outer cladding regions with the third outer cladding region arranged between the second and the fourth outer cladding region, the third outer cladding region in the cross-section comprising a number of third outer cladding features having a lower refractive index than any material surrounding the third outer cladding features, wherein for a plurality of said third outer cladding features, the minimum distance between two nearest neighbouring third outer cladding features is smaller than 1 µm or smaller than an optical wavelength of light guided through the fibre when in use.

When for a plurality of said first and/or third outer cladding features, the minimum distance between two nearest neighbouring outer cladding features is smaller than 1 µm, it is within a preferred embodiment that for a plurality of said first and/or third outer cladding features the minimum distance between two nearest neighbouring outer cladding features is smaller than 0,8 µm 0.5 µm, such as smaller than 0.4 µm, such as smaller than 0.3 µm, or such as smaller than 0.2 µm.

When for a plurality of said first outer cladding features the minimum distance between two nearest neighbouring first outer cladding features is smaller than an optical wavelength of light guided through the fibre when in use, it is preferred that for a plurality of said first outer cladding features, the minimum distance between two nearest neighbouring first outer cladding features is smaller than a shortest optical wavelength of light guided through the fibre. Also, when for a plurality of said third outer cladding features the minimum distance between two nearest neighbouring third outer cladding features is smaller than an optical wavelength of light guided through the fibre when in use, it is preferred that for a plurality of said third outer cladding features, the minimum distance between two nearest neighbouring third outer cladding features is smaller than a shortest optical wavelength of light guided through the fibre.

According to an embodiment of the invention, the core may have a cross-sectional dimension larger than 25 µm. Here, the cross-sectional dimension may be larger than 50 µm, such as larger than 75 µm, or such as larger than 100 µm, thereby causing the fibre to guide light in multiple modes within the core.

It is preferred that for one or more first outer cladding regions the first outer cladding features occupy a relatively large area of the first outer cladding region. Thus, the first outer cladding features may occupy 45% or more of the cross-sectional area of the one or more first outer cladding regions. It is preferred that for all the first outer cladding regions the first outer cladding features may occupy 45% or more of the cross-sectional area of the first outer cladding regions. It is also within preferred embodiments that, the first outer cladding features may occupy at least 50%, such as at least 60%, or such as at least 70% of the cross-sectional area of the first outer cladding region or regions. It is also within an embodiment of the invention that the third outer cladding features occupy 45% or more of the third outer cladding. Here, the third outer cladding features may occupy at least 50%, such as at least 60%, or such as at least 70% of the cross-sectional area of the third outer cladding.

The present invention also covers an embodiment in which the optical fibre comprises a core being surrounded by an inner cladding having a number of inner cladding features being periodically distributed in two dimensions within said inner cladding, said inner cladding being surrounded by a first outer cladding region. It is preferred that the core comprises a core feature having a lower refractive index than the refractive index of the core material surrounding the core feature. It is also preferred that the periodically arrangement of the inner cladding features comprises at least 4 or 5 periods in a radial direction from the centre of the inner cladding.

The first and/or third outer cladding features may be placed in a periodic or non-periodic manner. However, it is preferred that first and/or third outer cladding features are placed in a non-circular symmetric manner. It is also within an embodiment of the invention that the first outer cladding region in the cross section has a substantially hexagonal like shape.

The first outer cladding features may be of about equal size, but the invention also covers embodiments in which first outer cladding features of different size are present.

It is preferred that the first and/or third outer cladding features and/or the inner cladding features are voids, and it is preferred that the first and/or third outer cladding features and/or the inner cladding features are filled with vacuum, air, a gas, a liquid or a polymer or a combination thereof. Thus, according to an embodiment of the invention, the first and/or third cladding features may be voids filled with air.

For embodiments having an inner cladding with core being surrounded by an inner cladding or an inner cladding region, it is preferred that the core(s) has/have a cross-sectional dimension smaller than 10 µm. This may adapt the fibre to guide light in the core in a single mode. It is preferred that the core comprises at least one member of the group consisting of Ge, Al, P, Sn and B. However, the invention also covers embodiments in which the core(s) comprise(s) at least one rare earth, such as Er, Yb, Nd, La, Ho, Dy and/or Tm.

It is also within embodiments of the present invention that the fibre may have a long period grating or a fibre Bragg grating along at least a part of the fibre length.

It should be understood that different materials may be used for producing the fibre of the invention. Here, the fibre may comprise a background material being silica, chalcogenide, or another type of glass. It is also within the invention that the fibre may comprise a background material being polymer.

The present inventors have realised how the flexible design of microstructured optical fibres may be used for enhanced coupling efficiency for a pump light source (e.g., a semiconductor laser array), and how such designs may be readily fabricated using a preform fabrication technique that ensures a detailed control of the micro-structured elements.

One of the fundamental problems to be solved by the invention is to obtain a better transversal and longitudinal pump power distribution in fibre lasers and amplifiers by optimal combinations of microstructured elements in the inner cladding and an improved mode control of signal and pump modes in cladding pumped fibres through microstructuring of the outer cladding.

Thus, for embodiments of the invention comprising an inner cladding, the article of the invention may be a cladding pumped fibre laser or amplifier. Here, the article may be a cladding pumped fibre laser or amplifier comprising a pump radiation source and a length of said optical fibre. Thus, when the minimum distance between two nearest neighbouring outer cladding features is smaller than a shortest optical wavelength, the shortest optical wavelength may be determined by the wavelength of said pump radiation source.

It is also within an embodiment of the invention that the optical fibre in the cross-section has a non-uniform shape of the inner cladding region along the fibre length.

According to an embodiment of the invention, the first and/or third outer cladding features may be periodically distributed. Hereby, the fibre may exhibit photonic bandgap effects, which may confine cladding modes in the core and/or in the inner cladding region.

It should be understood that for fibres having an inner cladding, the inner cladding region may act as a reservoir for light generated in the core. The optical fibres of the present invention having an inner cladding may be optically pumped bi-directionally.

For fibres having inner cladding features, the fibre core material may be the same as the background material of the inner cladding region.

The present invention also covers embodiments wherein, for a majority or all of said first outer cladding features, the minimum distance between two nearest neighbouring outer cladding features is smaller than 1 µm. Here, for a majority or all of said first outer cladding features, the minimum distance between two nearest neighbouring outer cladding features may be smaller than 0,8 µm, such as smaller than 0.5 µm, such as smaller than 0.4 µm, such as smaller than 0.3 µm, or such as smaller than 0.2 µm.

Furthermore, the present invention also covers embodiments wherein, for a majority or all of said first outer cladding features, the minimum distance between two nearest neighbouring outer cladding features is smaller than an optical wavelength of light guided through the fibre when in use. Here, the optical wavelength may be a shortest optical wavelength of light guided through the fibre when in use.

Similarly, the present invention also covers embodiments wherein, for a majority or all of said third outer cladding features, the minimum distance between two nearest neighbouring outer cladding features is smaller than 1 µm. Here, for a majority or all of said third outer cladding features, the minimum distance between two nearest neighbouring outer cladding features may be smaller than 0.8 µm, such as smaller than 0.5 µm, such as smaller than 0.4 µm, such as smaller than 0.3 µm, or such as smaller than 0.2 µm. Furthermore, the present invention also covers embodiments wherein, for a majority or all of said third outer cladding features, the minimum distance between two nearest neighbouring outer cladding features is smaller than an optical wavelength of light guided through the fibre when in use. Here, the optical wavelength may be a shortest optical wavelength of light guided through the fibre when in use.

It should be understood that it is within a preferred embodiment of the invention that the outer cladding has an effective refractive no with a value lower than the effective refractive index of the core or any of the cores. It is also preferred that the outer cladding has an effective refractive index no, with a value lower that the effective refractive index of the inner cladding or inner cladding regions. Here, the effective refractive index of the inner cladding or inner cladding regions should be lower than the effective refractive index of the core or any of the cores.

According to an embodiment of the invention the second outer cladding region may be made of a homogeneous material.

For the first outer cladding features it is within an embodiment of the invention that the largest cross-sectional dimension are equal to or below 10 µm. Here, the largest cross-sectional dimension of the first outer cladding features may be equal to or below 3 µm.

For fibres according to the present invention having an inner cladding, it is within an embodiment of the invention that the inner cladding comprises a background material and a plurality of features, said features having a refractive index being higher and/or lower than the refractive index of the background material of the inner cladding. It is preferred that the inner cladding features have a lower index than the refractive index of the background material, and the inner cladding features may be voids. The inner cladding features may be filled with vacuum, air, a gas, a liquid or a polymer or a combination thereof. When the inner cladding features have a lower index than the refractive index of the inner cladding background material, the inner cladding features may have a cross-sectional diameter or dimension in the range of 0.3-0.6 times or 0.3-0.5 times a centre-to-centre spacing between neighbouring inner cladding features. Here, the centre-to-centre spacing between neighbouring inner cladding features may be an average centre-to-centre spacing. The centre-to-centre spacing may be larger than 5µm, such as in the range of 8-12µm, or such as about 10µm. It is also within one or more embodiments of the invention that the core comprises one or more dopants for raising or lowering the refractive index above the refractive index of the background material of the inner cladding. The outer diameter of the inner cladding may be within the range from 60-400µm, or within the range from 200-400µm.

The present invention furthermore covers embodiments wherein the optical fibre has a length with a first end and a second end, and wherein the cross-sectional area of the first outer cladding features in the first end are larger than any cross-sectional area of first outer cladding features in the second end. Here, the second end may comprise no first outer cladding features, or the first outer cladding features may be fully collapsed in the second end.

Similarly, the present invention covers embodiments wherein the optical fibre has a length with a first end and a second end, and wherein the cross-sectional area of the third outer cladding features in the first end are larger than any cross-sectional area of third outer cladding features in the second end. Also here, the second end may comprise no third outer cladding features, or the third outer cladding features may be fully collapsed in the second end.

It should be understood that according to the present invention, the first outer cladding features are elongate features extending in a fibre axial direction. Similarly, the third outer cladding features may be elongate features extending in a fibre axial direction, and also the inner cladding features are elongate features extending in a fibre axial direction.

For fibres having an inner cladding it is within an embodiment of the present invention that the background material surrounding the first outer cladding features or the bridging material fulfilling the area between neighbouring first outer cladding features has a lower refractive index than the refractive index of the background material of the inner cladding.

It is to be understood that both the foregoing general description and the following detailed description are merely exemplary of the invention, and are intended to provide an overview or framework for understanding the nature and character of the invention as it is claimed. The accompanying figures are included to provide a further understanding of the invention. The invention is not limited to the described examples but defined by the appended claims. The figures illustrate various features and embodiments of the invention, and together with the description serve to explain the principles and operation of the invention. Where indicated, the figures are used to describe prior art.

### Definition of expressions and terms

The term "article comprising an optical fiber" is intended to be interpreted broadly. For example it includes the optical fiber itself, e.g. an optical fiber coated with a fiber coating; an optical fiber product comprising the optical fiber in e.g. cabling; an optical fiber product comprising the optical fiber as an optical component; or an optical communication system or parts thereof comprising the optical fibre.

For micro-structures, a directly measurable quantity is the so-called "filling fraction" that is the volume of disposed features in a micro-structure relative to the total volume of a micro-structure. For fibres that are invariant in the axial fibre direction, the filling fraction may be determined from direct inspection of the fibre cross-section.

In this application we distinguish between "refractive index", "geometrical index" and "effective index". The refractive index is the conventional refractive index of a homogeneous material. The geometrical index of a structure is the geometrically weighted refractive index of the structure. As an example, a structure consisting of 40% air (refractive index = 1.0) and 60% silica (refractive index ≈ 1.45) has a geometrical index of 0.4×1.0 + 0.6×1.45 = 1.27. The procedure of determining the effective refractive index, which for short is referred to as the effective index, of a given micro-structure at a given wavelength is well-known to those skilled in the art (see e.g., Joannopoulos et al., "Photonic Crystals", Princeton University Press, 1995 or Broeng et al., Optical Fiber Technology, Vol. 5, pp.305-330, 1999).

Usually, a numerical method capable of solving Maxwell's equation on full vectorial form is required for accurate determination of the effective indices of micro-structures. The present invention makes use of employing such a method that has been well-documented in the literature (see previous Joannopoulos-reference). In the long-wavelength regime, the effective index is roughly identical to the weighted average of the refractive indices of the constituents of the material, that is, the effective index is close to the geometrical index in this wavelength regime. Naturally, for a homogeneous medium, the effective refractive index is identical to the refractive index.

### 3. BRIEF DESCRIPTION OF THE DRAWINGS

The functionality and additional features of the invention will become clearer upon consideration of the different embodiments now to be described in detail in connection with the accompanying drawings. In the figures:
Fig. 1 shows a double-clad fibre according to prior art, in which the inner cladding is circular.
Fig. 2 illustrates a double-clad fibre according to prior art, in which the inner cladding is elongated in one transverse direction.
Fig. 3 illustrates a double-clad fibre according to prior art, in which the inner cladding is non-circular, having a leafed cross-section.
Fig. 4 shows an example of a double-clad fibre according to prior art, in which the first outer cladding is substantially an air-clad region.
Fig. 5 illustrates the silica bridging regions that exists around the interface of the inner and outer cladding. A minimum width of a bridging region is defined.
Fig. 6 illustrates the numerical aperture of air-clad fibres having a fixed air filling fraction of about 45%, but various widths of the bridging region.
Fig. 7 illustrates the numerical aperture of air-clad fibres having a fixed air filling fraction of about 58%, but various widths of the bridging region.
Fig. 8 compares the numerical aperture of air-clad fibres having different air filling fractions for similar bridging widths.
Fig. 9 shows a photonic crystal fibre cross section according to prior art in which the effective refractive index of the inner cladding is determined by a large number of periodically arranged, smaller air-holes and the effective refractive index of the outer cladding is determined by air-holes of a different cross section compared to those of the inner cladding.
Fig. 10 illustrates an example of a cross-section of a photonic crystal fibre in which the air holes forming the second cladding are positioned non-circularly.

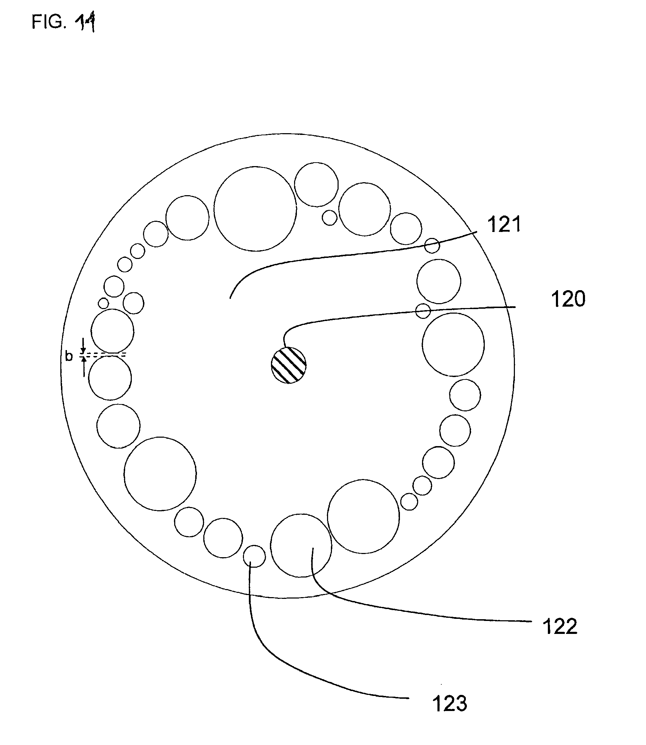

Fig. 11 illustrates an example of a cross-section of a photonic crystal fibre in which the air holes forming the second cladding are of various sizes.
Fig. 12 shows another example of a photonic crystal fibre according to the present invention. The fibre has a large core region where light may be guided in a single mode. The fibre further has a microstructure in the inner cladding acting to support only single mode in the core and an air-clad region acting to provide a high NA for modes in the inner cladding.
Fig. 13 illustrates schematically the parameter, T, which is used to characterise the thickness of the air-clad layer.
Fig. 14 shows schematically an optical fibre according to the present invention, wherein periodically distributed features in the inner cladding provides confinement of signal light using PBG effect.

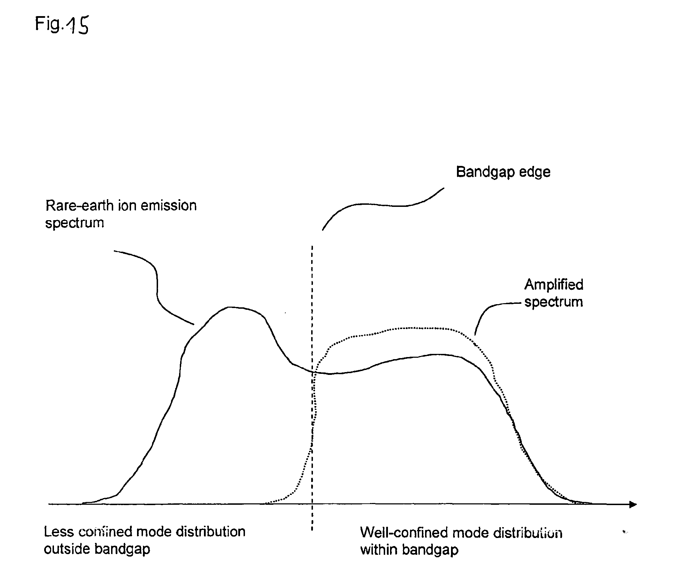

Fig. 15 shows schematic the operation of a fibre amplifier or a fibre laser, where improved efficiency is obtained through the use of PBG effect.
Fig. 16 shows experimental and simulated results of NA for two fibres with different bridging widths as a function of wavelength.
Fig. 17 shows experimental and simulated results of NA as a function of wavelength divided by the bridging width.
Fig. 18 shows schematically the cross-section of an optical fibre according to the present invention having a lower refractive index in the bridging regions compared to the background material of the inner cladding region.
Fig. 19 shows schematically the refractive index profile along one direction in the cross-section of a fibre according to the present invention having a lower refractive index in the bridging regions compared to the background material of the inner cladding region.

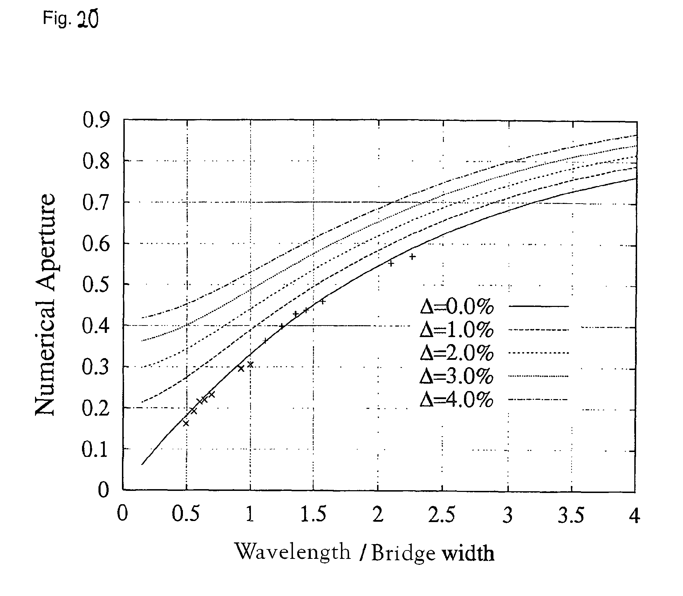

Fig. 20 shows simulated results of NA as a function of wavelength divided by the bridging width for fibres with different refractive index contrasts between the bridging regions and the background material of the inner cladding region.

### 4. DETAILED DESCRIPTION

This description of the present invention is based on examples. The invention is in no way limited to the presented examples that merely act to illustrate the concepts and design ideas that underlie the invention.

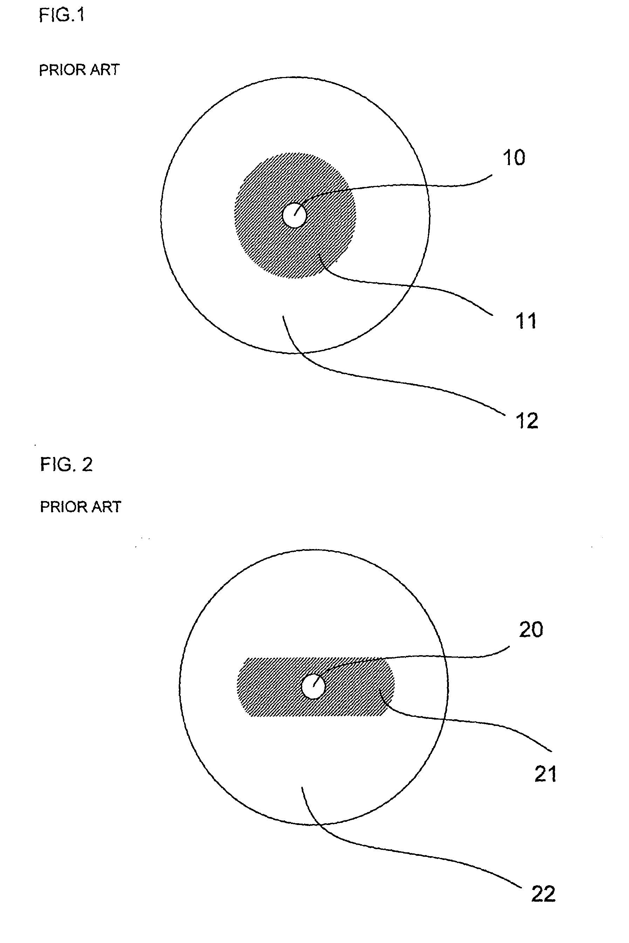

Fig.1 shows an example of a typical double clad fibre known in the prior art. This type of fibre is widely used for cladding pumped fibre amplifiers and lasers. The fibre is characterised by a core region 10 and two cladding regions; an inner cladding region 11 and an outer cladding region 12. Typically, the refractive index of the core region is higher than that of the inner cladding region, whereby the core may acts as a core in a conventional single mode optical fibre, and the inner cladding region has a higher refractive index than that of the outer cladding region, whereby a number of cladding modes may be guided in the inner cladding. The principle of the fibre as a cladding pumped amplifier or laser device is merely that pumping of an active material in the fibre core is facilitated using the cladding modes as means for transferring pump light from a pump laser to the core. High power lasers are typically multi-mode and may more efficiently be coupled to cladding modes of the double clad fibre than directly to a mode in the core. By transfer of optical energy from the cladding modes to the core mode along the fibre length, an overall more efficient pumping may be achieved compared to direct coupling of pump laser light into the fibre core. In the section regarding background of the invention a number of references to this type of fibre device may be found (see also US 5,937,134).

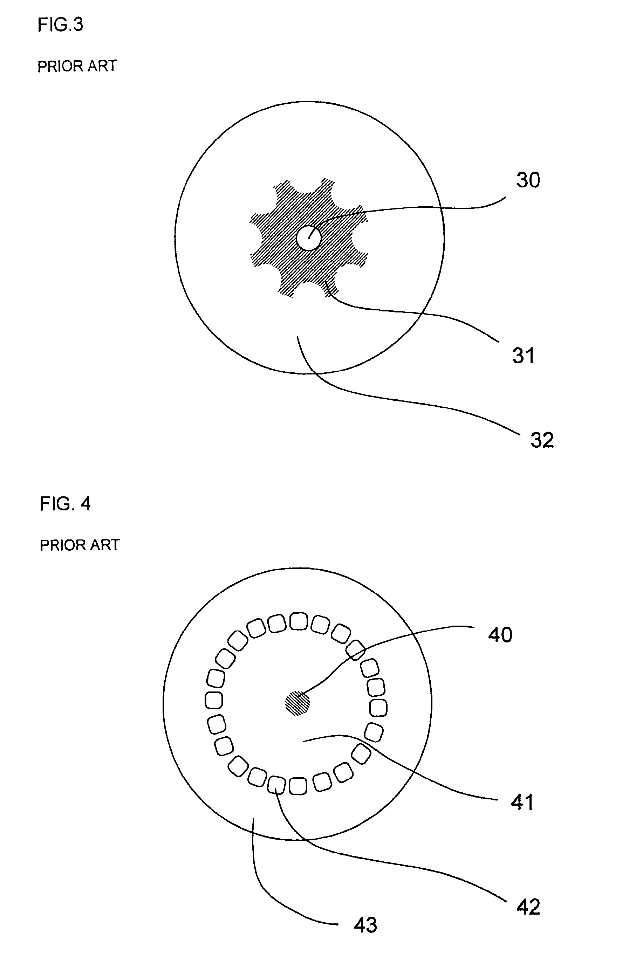

To improve the transfer of energy from cladding modes to a core mode, a non-circular shape of the inner cladding region is often employed. Fig. 2 shows an example of a prior art double clad fibre having a nearly rectangular shaped inner cladding region 21 that surrounds the core region 20. The outer cladding region 22 is characterized by a lower refractive index than the inner cladding region, as for the fibre in Fig. 1. The advantages of using non-circular symmetric shape of the inner cladding have been described in the background of the invention. Additionally, the shape of the inner cladding region and the incorporation of stress-applying features in the inner cladding feature may be utilized to achieve birefringence in double clad fibres, such as for example for polarization maintaining applications (see US 5,949,941 for examples of such fibres). Fig. 3 shows another example of a prior art fibre having non-circular shape of the inner cladding 31.

When optimising cladding pumped fibres and fibre devices, a first important issue to address is the realization of a large index contrast between the inner cladding region and its outwards surroundings. This is important in order to have a high numerical aperture, NA, of the inner cladding such that efficient coupling from a pump laser to the cladding modes may be achieved. Typically, the numerical aperture of pump lasers, such as for example multi-mode solid state lasers, is significant larger than 0.2. Hence, it is desired to realise fibre designs having an inner cladding region with a NA larger than 0.2 at the pump wavelength. Secondly, it is important to match the field distribution, both in spatial size and shape, of the cladding modes to the pump fibre modes. Thirdly, it is important that the fibre has an efficient transfer of energy from cladding modes to the core.

An example of a prior art double clad fibre having a potentially large NA of the inner cladding 41 is illustrated in Fig. 4. This fibre is a so-called air-clad fibre that is characterized by the outer cladding being divided in two regions; a first outer cladding region comprising a number of low-index features (typically air holes) 42 and a second outer cladding region 43 surrounding the first outer cladding region and mainly acting as an overcladding layer that provides mechanical support and stability of the fibre. In US 5,907,652, DiGiovanni et al. describe this type of air-clad fibre. DiGiovanni et al. point out that it is an advantage to use air holes in order to achieve a low effective refractive index of the first outer cladding region.

DiGiovanni et al. state that the effective refractive index is determined by the air-filling fraction and in order to improve the fibre the air filling fraction should be as large as possible. In preferred embodiments, the fibre of DiGiovanni et al. therefore have more than 50% air filling fraction, and further preferred embodiments have more than 75% of air in the air clad layer (referred to as a "web"). Generally, it is well understood that the effective index of microstructures may be lower by increasing the air filling fraction (or fraction of low index features), it therefore appears a straight-forward improvement to increase the air filling fraction in the fibres presented by DiGiovanni et al. (equivalent to increasing the air filling fraction, DiGiovanni et al. state that the amount of high index material (typically silica is the background material of the "web") in the air clad region should be reduced - preferably below 50% or further below 25%).

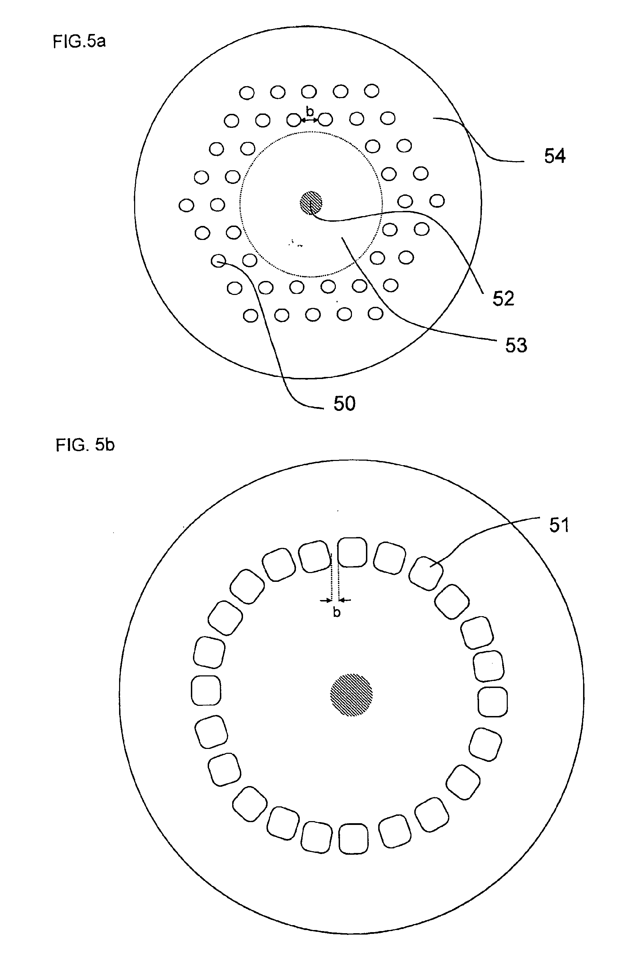

By using a detailed theoretical analysis of the NA of the air-clad fibres, it turns out that the statement presented by DiGiovanni et al. regarding improvements of air-clad fibre is too simple and focuses only on the air filling fraction. In fact, it turns out that a large air-filling fraction in certain cases is no advantage to cladding pumped fibres. On the other hand, it surprisingly turns out that the width of high index material in the first outer cladding region is an important parameter for optimising air-clad fibre and which parameter can be tuned with respect to the optical wavelength of the light guided through the optical fibre. Looking at the cross-section of an air-clad fibre, the parameter in question is the thickness of the threads in the "web" which threads are comprised in the air-clad layer. More specifically, the parameter, labelled b, is "the smallest width of high index material in the first outer cladding region" as illustrated in Fig. 5 for two different air-clad fibres. In Figs. 5a and 5b, both fibres have a core region 52, an inner cladding region 53, a first outer cladding region that comprises low-index features 50 and 51, respectively, and a second outer cladding region 54. The parameter b is indicated for both fibres. The parameter, b, may also be seen as the distance between two features meaning the minimum distance between edges of two neighbouring low-index features. In the case of periodically distributed low-index features in the first outer cladding, such as indicated in Fig. 5a, it should be clear that b is independent of which two low-index features are used to define b. On the other hand, in the case of non-periodic low-index features - or air-clad structure with some structural fluctuations that often occur due to fabrication - b will not be uniform throughout the first outer cladding - see Fig. 5b. In this latter case, the invention will relate to typical representative values of b, a plurality of the possible b's, a majority of b's or all b's.

A theoretical tool for analysing air-clad fibres is a full-vector numerical computer program that has been extensively tested and is well described in literature (see Johnson et al., Optics Express 8, no. 3, 173-190 (2001)).

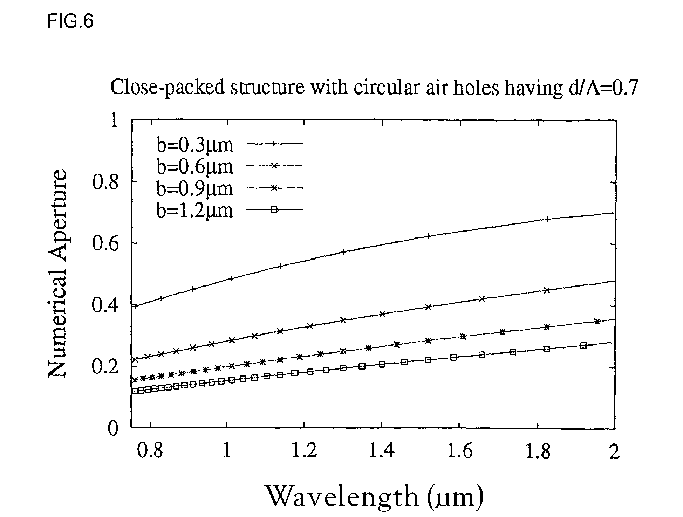

In order to understand the findings of the present inventors, Fig. 6 shows the NA relating to the cladding modes for an air-clad fibre with a design as schematically shown in Fig. 5a. The fibre has a moderate air-filling fraction in the first outer cladding region of about 45% (hence below that of the stated preferred embodiments of the air-clad fibres by DiGiovanni et al. in US 5,907,652). Looking at Fig. 6, it is seen that by tuning the parameter b, to 0.6 µm or lower, it is possible to achieve NA of more than 0.2 over a wavelength range λ larger than from about 0.8 µm to 2.0 µm. Typically preferred pump wavelengths for Erbium doped fibre amplifiers and laser are about 0.98 µm and about 1.48 µm. For fibre amplifiers and lasers with other rare-earth dopants, such as for example Yb, preferred pumping wavelengths are about 1.06 µm. From Fig. 6, it is also found that larger dimensions of b than 0.6 µm are not an advantage when the air filling fraction is limited to about 45%. Hence, the air-filling fraction alone is not a sufficient parameter to adjust when optimising an air-clad fibre to have a large NA.

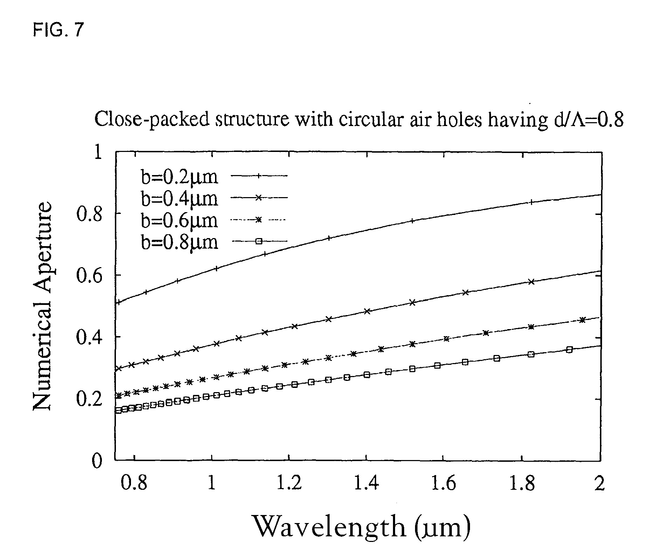

Looking at a similar air-clad fibre as in Fig. 6, but having a larger air-filling fraction of the first outer cladding, namely about 58%, it is again found that the parameter b plays an important role when optimising the NA - see Fig. 7. For the important wavelength range of about 0.98 µm to 2.0 µm, it is found that to have an NA of more than 0.2, the b parameter has to be smaller than 0.8 µm. As previously stated, a large air-filling fraction may not necessarily provide a high NA. This is seen from Fig. 7 where the NA is lower than 0.2 for b larger than 0.8 times the optical wavelength. On the other hand, the same air-filling fraction may provide a very high NA - of more than 0.5 - if b is smaller than 0.2 times the optical wavelength (we refer only to the free-space optical wavelength in the present invention). Also it is seen that NA of higher than 0.3 may be achieved for b smaller than 0.4 times the optical wavelength.

While Fig. 6 and Fig. 7 address only two different air filling fractions, it turns out that to have a NA of about 0.2 or larger, it is required that b is not larger than the optical wavelength of light guided through the fibre. Hence, for pumping about 0.98 µm, it is required that b is smaller than 1.0 µm.

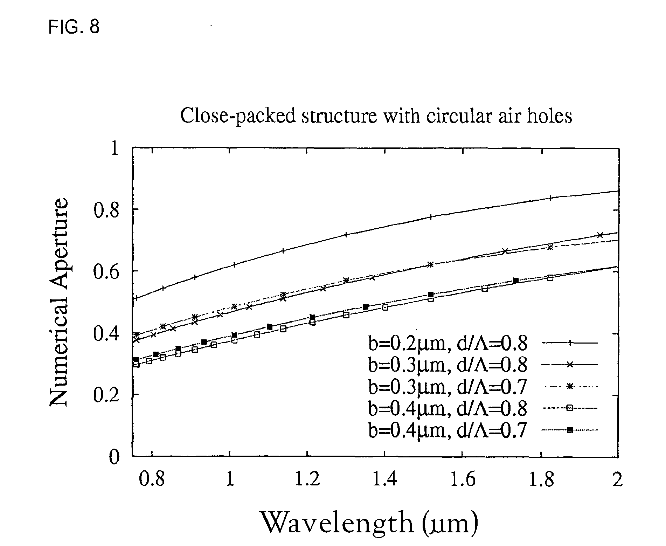

With the teachings of DiGiovanni et al, it may appear surprising that the parameter b plays such an important role regarding the NA of air clad fibres. Following the teachings of DiGiovanni et al., it may be even more surprising to see that the same NA may actually be achieve for two fibres with different air filling fractions, but similar value of the b parameter. This is, however, what the present inventors have found - as may be seen from Fig. 8. The figure shows the NA of a fibre with an air filling fraction of about 58% and b of 0.2 µm (top curve). Further, the figure compares the NA of two fibres with similar b value of 0.3 µm, but different air filling fractions of about 45% and of about 58% (curves labelled d/Λ=0.7 and d/Λ=0.8, respectively). From these two curves it is found that despite the different air-filling fraction, the NA of the two fibres is almost identical over the broad wavelength range from about 0.8 µm to 2.0 µm. This result further shows the importance of the b parameter regarding the NA of the air clad fibres and how focusing alone on the air filling fraction for the optimisation of the fibres is a too simple approach. To demonstrate that the NA is not only by chance coinciding for the fibres having b=0.3 µm, Fig. 8 furthermore shows that this is also the case for fibres with b=0.4 µm.

As seen from Fig. 6 to 8, the NA of the fibres is decreasing at shorter wavelengths. This decrease is related to the larger bridging width relative to the optical wavelength. It turns out that it is a further advantage that the bridging material has a lower refractive index than the background material of the inner cladding region. For a given desired NA of a fibre, this allows an increase of bridging width, or alternatively for a given desired bridging width, it allows a higher NA to be achieved. These aspects allowing increased bridging width for a given NA, may prove advantageous for issues relating to mechanical robustness and handling of the fibres, such as for example cleaving and splicing - as shall be discussed at a later stage of the present application. Therefore, in preferred embodiments, the air-clad layer comprises low-index features placed in a background material having a refractive index being at least 0.5% lower than a refractive index of the background refractive index of the inner cladding region. Preferably, the index difference is larger, such as larger than 1%, or 2%, or larger. Such differences may well be achieved using silica-doping techniques by for example using F-doped silica glass for the background material of the air-clad layer and/or using Ge-doped glass for the background material of the inner cladding region. Using other types of glasses - such as non-silica glasses - even larger index differences may be achieved. Therefore, in further preferred embodiments, the afore-mentioned index difference is larger than 5%, or larger than 10%. For index difference of about 10% or less, typically the increase in bridging width that can be obtained is relatively small for fibres having NA of about 0.5 or larger. Hence, in preferred embodiments, the bridging widths are in the range of about 200nm to 400nm for fibres with NA of about 0.5 or larger.

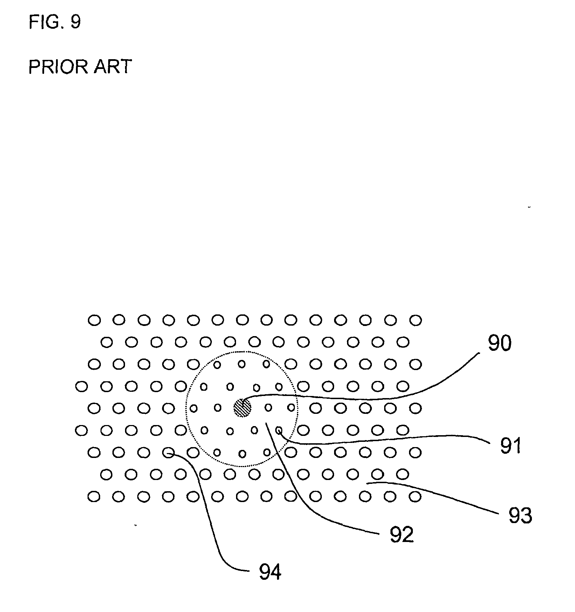

Having focused on the air-clad region, it is naturally also important to notice that a microstructuring of the inner cladding region may influence the NA. In this respect, a large number of micro-structured, low-index features in the inner cladding region may degrade the NA of the cladding modes. Hence, fibre designs having a (large) number of large inner cladding features, as presented in the prior art, may not be advantageous (see previously mentioned Russell et al. reference under the background of the invention section). An example of such a fibre is shown in Fig. 9. An advantage of micro-strucuring of the inner cladding region is, however, that the microstructuring may be used to tailor the mode field distribution in the inner cladding - or to scramble the cladding modes - to provide an improved overlap with a core mode. It turns out that to optimise air-clad fibre for cladding pumped applications, a relatively low number of inner cladding features should be employed - in order not to degrade severely the NA of the fibre.

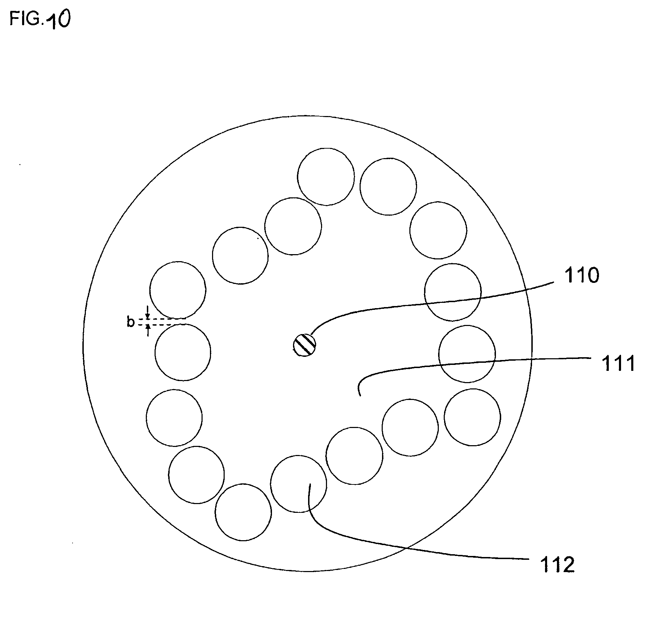

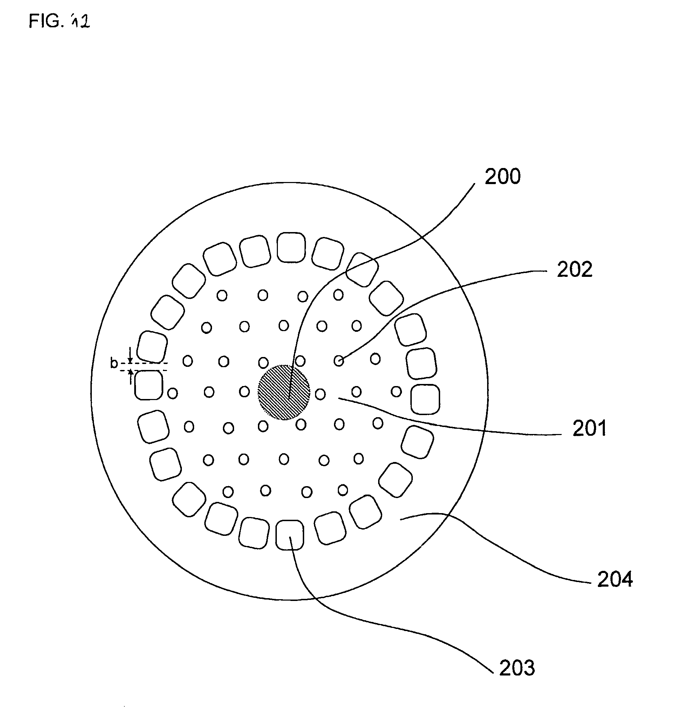

Another embodiment is shown in Fig. 10. The shape of the inner cladding region 111 may also be non-circular using a non-circular arrangement of low-index features 112 in a first outer cladding region. The core 110 of this fibre is also shown. Another example of an optical fibre is indicated in Fig. 12, here the core 120 is surrounded by an inner cladding region 121 that has a non-circular outer shape that has been achieved by using different-sized, low-index features 122, 123 in a first outer cladding region.

In order to produce optical fibres according to the present invention, a technique well known for fabrication of microstructured fibres may be employed, see for example US5907652, or any of the afore-mentioned references. This method has been adapted to produce embodiments of the optical fibers according to the present invention. The method is based on stacking of capillary tubes and rods to form a preform and drawing this into fibre using a conventional drawing tower.

Optical fibres according to the present invention will often comprise Bragg gratings along a part of their length, for example for realization of optical fibre lasers. These Bragg gratings may be introduced by UV-writing of refractive index changes in the longitudinal direction of the optical fibres.

An example of a preferred embodiment of an otical fibre according to the present invention that may be used for fibre laser applications is shown in Fig. 12. The figure shows schematically the cross-section of a fibre that contains an active core region 200, typically realised by doping of one or more rare-earth elements, such as for example Yb or Er. Surrounding the core region is an inner cladding comprising a background material 201 and a number of high- and/or low-index features 202. Surrounding the inner cladding region is an air-clad layer 203 that finally is surrounded by an overcladding region 204. Such a fibre, may for example be designed in silica materials, with the inner cladding features 202 being voids. In a preferred embodiment, the optical fibre is used as a large-mode area, cladding pumped optical fibre laser for high-power applications. Using low-index features in the inner cladding with a diameter of about 0.30 to 0.50 times an average, typical or representative centre-to-centre spacing ,Λ, between the inner cladding features, single-mode operation at a signal wavelength, λₛ, may be obtained in the core region, whereas the core as well as the inner cladding region may be pumped with a pump light at a wavelength, λₚ, being smaller than λₛ. Typical values of λₚ are about 800nm, 980nm, 1050nm, and 1480nm and typical values of λₛ are about 980nm, 1050nm, 1300nm, 1550nm, such as from 1500nm to 1640nm. Even in the case of a significant number and size of the inner cladding features, a high NA may be obtained using an air-clad layer when b values are in the range from 100nm to 1000nm (preferably smaller than 400nm) - as previously described. Typically, the core region 200 will comprise one or more index-raising dopants (that are introduced to improve incorporation of rare-earths into silica). It may therefore be preferred to fabricate the optical fibre using a background material 201 having a refractive index above that of pure silica, such as larger than 1.444 at a wavelength of 1.55 µm. This may for example be obtained by having a background material 201 comprising Ge and/or Al. The core region may also comprise one or more co-dopants (apart from one or more (active) rare-earth dopants and any optional index-raising co-dopants) that decrease the refractive index, such as for example F and/or B. Regarding dimensions of a fibre, such as the one, shown in Fig. 12, typically the inner cladding region will have an outer diameter of about 60µm-100µm, for fibres with an outer diameter of about 125 µm of the outer cladding region 204. For fibres having a larger outer diameter, the inner cladding may have an outer diameter up to 200 µm. Typically, the inner cladding features will be characterized by a typical centre-to-centre spacing, A, of more than 5 µm, and typically about 10 µm, such as in the range from 8.0 µm to 12.0 µm. In order to avoid bending lusses, but to maintain the fibre single mode in the core region at the signal wavelength, the inner cladding features will typically have a diameter in the range from 0.3 Λ to 0.6 Λ^{~} The fibre may be employed as part of an article being a fibre laser, where the article comprises one or more pump sources and external reflectors or the reflectors are formed directly in the fibre using one or more UV-induced Bragg gratings.

Optical fibres according to the present invention that are used for laser or amplifier applications may be pumped in various ways known from standard fibre technology, such as end- and side-pumping.

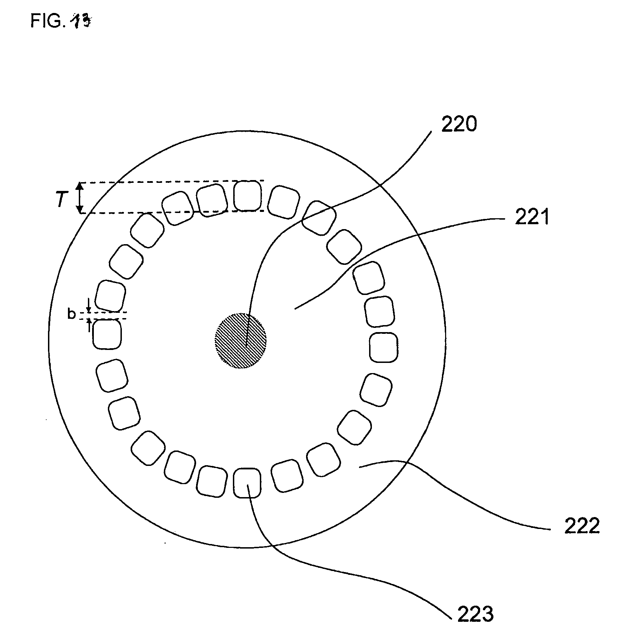

The present inventors have further realized another design parameter that is of practical importance for fibres having an air-clad layer. Through experimental work, the present inventors have realized that the thickness, T, of the air-clad layer 223 plays an important role mechanically for cleaving of the fibres. The T-parameter is indicated in Fig. 13, for a fibre with a doped core region 220, an inner cladding region 221, an air-clad region 223 and an outer cladding region 222. As cleaving is usually performed by introducing some kind of scratch to the outer surface of the fibre, and having this scratch developing into a crack going through the fibre, it may be a disadvantage if the air-clad layer has a too large thickness, T, such that the inner cladding region becomes mechanically isolated from the outer cladding. On the other hand, the thickness, T, has to be of a certain size in order to optically isolate the inner 221 and outer cladding 222. The present inventors have realized that an optimum thickness of the air-clad layer 223 is in the range from about 3.0 µm to about 10 µm. Since fibres according to the present invention may also be used for applications where the air-clad layer after fibre fabrication is filled by e.g. polymers and/or other materials, other thickness values may be of interest in order to obtain a given volume. Hence, air-clad layers with thickness larger than 10 µm may also be of relevance.

The present inventors have further realized that an improved type of cladding pumped erbium-doped fibre amplifiers (EDFAs) may be obtained through the use of the PBG effect for confining the core mode inside the fibre. Generally, when optical fields are confined through the use of the PBG effect, at least 4-5 periods of the periodically distributed cladding holes need to be used. As optical cladding pumped fibres may have relative large inner cladding regions a sufficient number of periods may well be included for confinement of the core mode. The advantages of using PBG confinement are secured. A first aspect is that the PBG structuring at the wavelength of the amplified mode may work as a mode-scrambling structure of air-holes at the wavelength of the pump mode field, but without confining the pump distribution to the limited center part of the PCF. Hence, in preferred embodiments, the present invention comprises air-clad fibres having periodically distributed features in the inner cladding region that provide waveguidance by PBG effect of light at signal wavelength.

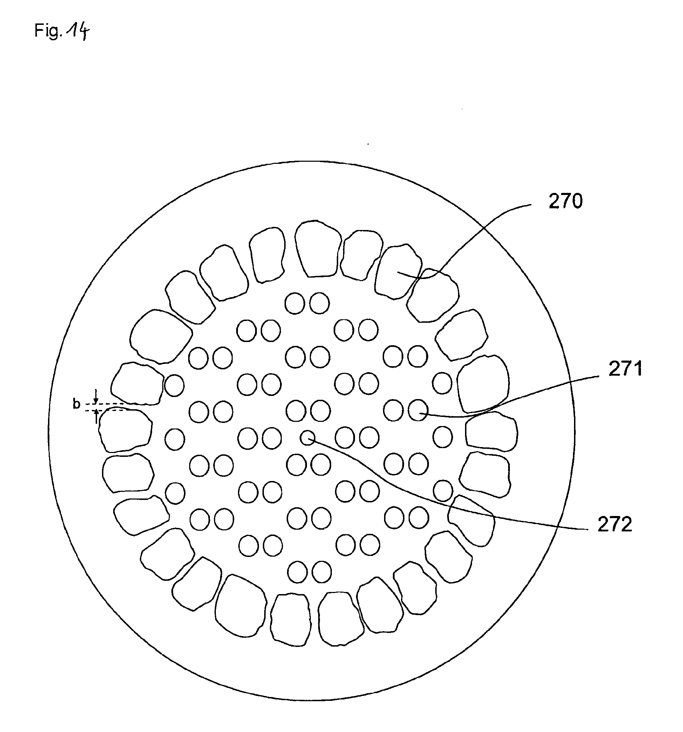

Fig. 14 shows an example of an optical fibre according to the present invention that comprises an air-clad layer 270 for providing a high NA, and a number of periodically distributed features 271 in the inner cladding. The fibre further comprises a low-index feature 272 in the core. The feature 272 may for example be a void or down-doped silica glass. The features may optionally comprise active material, such as a rare-earth-doped (RED) material, that provides amplification for optical amplification or lasing. The fibre also comprises an active material in a region surrounding the feature 272.

Furthermore, we may obtain a better power conversion from pump to signal because different overlap between RED material signal mode, and cladding pump distribution may be obtained. In a further aspect, the PBG guidance may be used to obtain high-power output from lasers and amplifiers operating in a higher-order mode (a non-gaussian mode distribution). This is possible because the PBG structure may be designed such that the core mode will only guide in a higher-order mode and all other modes will be leaky because they are placed outside the bandgap. The PBG guidance for the amplified mode may also find relevant use in applications where amplifiers with special dispersion properties are needed (for pulse spreading or pulse compression).

In yet a further aspect, the PBG guidance may be used to enhance specific parts of the amplifier spectrum. Here, we may place the bandgap edge at a frequency within the emission spectrum of the rare-earth ion. For the part of the RED-emission spectrum which is inside the bandgap, the core mode is well confined, whereas the spectral components which are outside the bandgap are less well confined, and consequently, the two ranges undergo different amplification. This property may be used to spectrally shape new high-power amplifiers and to fabricate lasers with special emission wavelengths, through the strong mode selection/discrimination made possible by the PBG effect. A schematic illustration of this aspect is presented in Fig. 12.

Fibres according to the present invention may be fabricated using techniques that are well known in the area of micro-structured fibres. For example, the air-clad layer and optional features in the inner cladding region may be realised using a stack- and draw method that employs capillary tubes and rods. This method has been well described in literature, see e.g. US 5,907,652 and US 5,802,236. Fibres according to the present invention that are non-uniform in the longitudinal direction, may be realized using various types of post-processing steps after fibre drawing, such as heat-treatment, stretching, pressurizing or vacuum-treatment of the voids in the fibres, introduction of materials into the voids or combinations of these steps.

Specifically for fabricating fibres it may be advantageous to draw the fibre in multiple steps, where a single core and its surrounding air-clad layer is fabricated by in a first step assembling a preform comprising a single solid rod surrounded by a layer of tubes of smaller diameter than the rod. This preform having a diameter of typically 10mm to 50mm may be drawn into a number of first canes - typically of diameter 1mm to 5mm. A second preform may then be fabricated by stacking a number of first canes together and this preform may optionally be overcladded and drawn directly into fibre, or the second preform may be drawn to a number of second canes that again may be stacked together and overcladded to form a third preform that may be drawn into fibre.

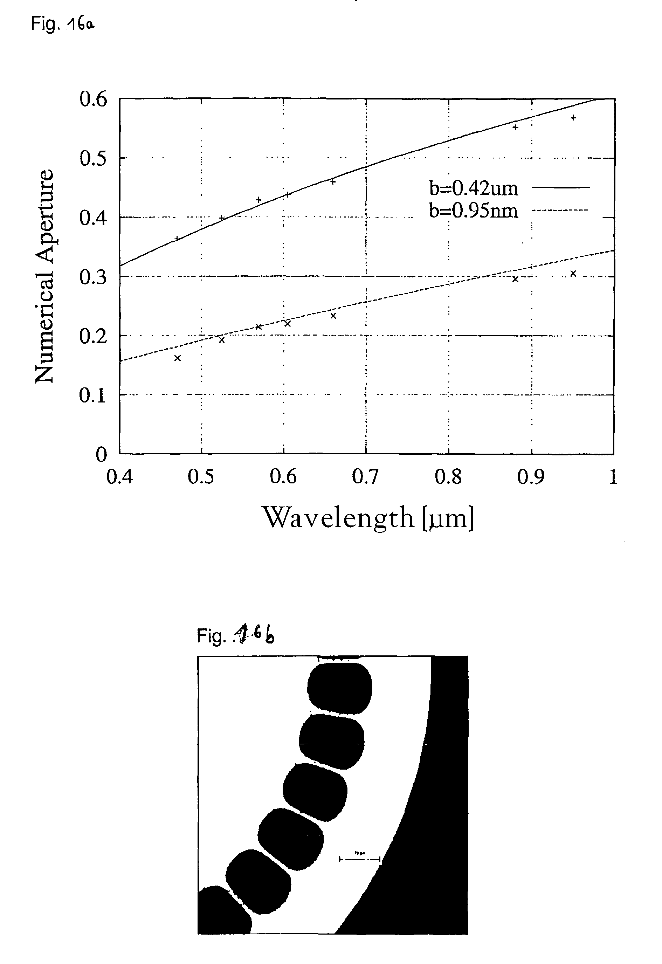

Fig. 16a shows experimental results of measured NA for two different air-clad fibres. Each of the fibres has an air-clad region with a design as shown schematically in Fig. 5b, but the fibres have different b-values of 420nm and 950nm. In the figure, measured NA values are indicated by points, whereas the lines indicated simulated NA of the fibres. A very good agreement for the fibres is observed. The figure shows that the NA of the fibre with bridging regions of minimum width, b, of about 420nm is significantly higher than for the fibre with b of about 950nm. A microscope picture of a part of the fibre with b=420nm is shown in Fig. 16b. The air-clad layer comprises a single ring of air holes and preferably the width of the air holes in radial direction from the centre of the fibre is in the range of 5 µm to 15 µm. It is here desired to keep the radial width - and thereby the bridging regions - long enough to ensure the optical properties in terms of high NA, while the radial width is short enough to ensure good mechanical properties in terms of cleaving of the fibre and/or handling strength. Further issues to consider for the width, may be heat transfer from the inner parts of the fibre to the outside. For high power applications, it may be desirable to have a limited radial width of the air-clad region in order to avoid thermal isolation. Accordingly, it may be preferred to have a high number of bridging regions - equivalently a high number of low-index features in the outer cladding - to provide sufficient heat transfer. In preferred embodiments, a smallest cross-sectional distance from two neighbouring bridging regions is, therefore, kept above a first size to ensure optical isolation (typically a distance of about three to five times an operating wavelength is sufficient to ensure isolation of the individual bridges), while at the same time being lower than a second size to ensure a sufficiently large number of bridges (for example a second size of about ten times an operating wavelength). Other first and second sizes may, however, be preferred. Typically, the range of the second size may vary significantly, such that a second size of several tens times an operational wavelength may be preferred.

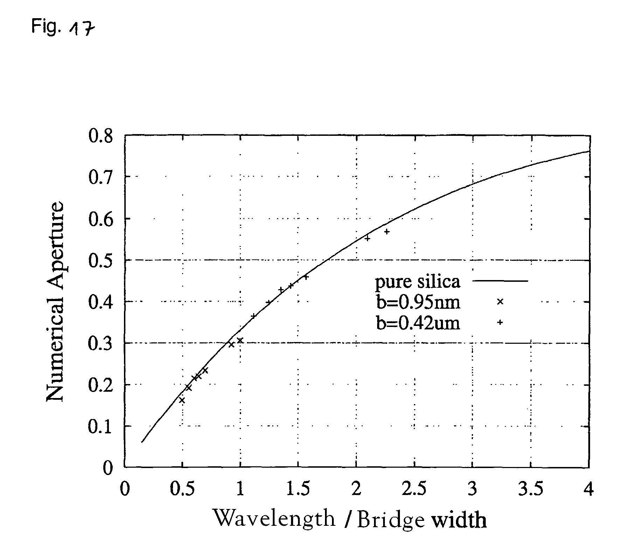

Fig. 16a further shows how the NA is varying with wavelength. The present inventors have realized that the NA and its variation are primarily determined by the wavelength relative to the b-parameter. To demonstrate this in more detail, Fig. 17 shows the NA as a function of wavelength divided by b for both experimentally obtained results and simulations. As for Fig. 16, the results in Fig. 17 are for a fibre solely comprising pure silica and air holes in the air-clad region. The figure shows a very clear relation between NA and wavelength divided by b, λ/b - and the experimentally observed. results are confirmed by numerical simulations. Hence, Fig. 17 may be used to design fibres with a certain NA at a given wavelength. From Fig. 17 it is found that in order to obtain an NA of about 0.3 or higher, b should be smaller than λ. For an NA of about 0.4 or higher, b should be smaller than approximately 0.8λ, and for NA higher than 0.5, b should be smaller than approximately 0.6λ. and for NA higher than 0.6, b should be smaller than approximately 0.45λ The figure also illustrates that extremely higher NA of more than 0.7 is feasible using b of smaller than approximately 0.3λ. Hence, for an applications where a fibre according to the present invention is used as a cladding pumped device (for example a laser or an amplifier) with a pumping wavelength of about 980nm and a NA of about 0.5 is desired, b should be designed to be about or smaller than 560nm.

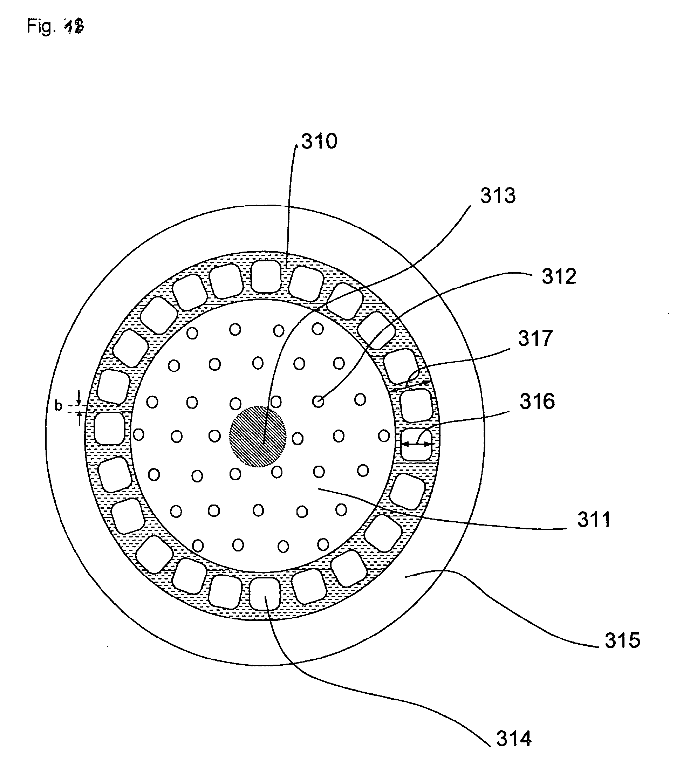

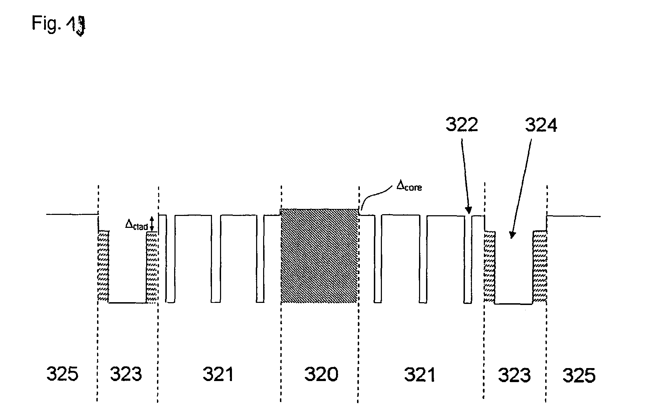

For various applications, it may be desired to obtain the largest possible bridging regions for a given NA. This may for example be for improved mechanical properties such as for fibre strength or cleaving, or it may be for improved heat transfer as discussed previously. In order to increase the bridging width for a given NA, the present inventors have realised that it is an advantage to have an index difference, Δ_{clad}, between the material of the bridging regions and the background material of the inner cladding. Fig. 18 shows schematically an example of an improved fibre according to the present invention, where the outer cladding region comprises a background material 310 having a lower refractive index than the refractive index of the background material 311 in the inner cladding region. This index difference may for example be realised using silica-doping techniques, where the inner cladding region comprises Ge-doped silica glass and the outer cladding region comprises un-doped silica glass. Naturally, other manners of realising this index difference may be thought of, for example using F-doped glass in the outer cladding as Flour decreases the refractive index compared to pure silica. The index difference, Δ_{clad}, is also schematically illustrated in Fig. 19 that shows a schematic example of the refractive index profile in one direction through the cross-section of a fibre according the present invention. While Fig. 17 showed the NA as a function of λ/b for no index difference between the refractive index of the background material in the inner and outer cladding, Δ_{clad}=0%, Fig. 33 shows how the NA may be increased by increasing Δ_{clad.} The figure shows simulations of the NA for silica-based fibres where Δ_{clad} is varied from 0% to 4%. As seen from the figure, a significant increase in NA may be realised using non-zero Δ_{clad}. As an example, the previously discussed fibre device operating at a pump wavelength of 980nm and an NA of 0.5, a b-value of about 650nm may be realised as compared to b=560nm for the fibre with Δ_{clad}=0% (NA of 0.5 occurs for λ/b of about 1.50 and 1.75 for Δ_{clad}=1% and 0%, respectively). As another example, fibres with an NA of about 0.5 may be realized for b of about λ for Δ_{clad} about 3%. Further, fibres with NA of higher than 0.8 may be realised for λ/b of about 3.0 or larger. The ideas of increasing the NA using non-zero Δ_{clad}, may be utilized for all types of high NA fibres comprising low-index features 314, 324 in the outer cladding region and is not limited to the two example shown in Fig. 18 and 19 having an active core 313, 320 and inner cladding features 312, 322 in the inner cladding region 321. Optionally, the overcladding region 315, 325 may comprise a background material being different than the background material 310. While it is the refractive index difference between the material in the bridging regions and the background material in the inner cladding that provides the improved NA properties, the radial width of the outer cladding comprising a low-index background material 317 may not be critical. It may be preferred that the radial width 317 is larger than the radial width of a low-index feature in the outer cladding 316. Such a relation could occur for a fibre being fabricated using the stack and pull process (as described for example in US 5907652) where the outer cladding region is realised using silica capillary tubes having a lower refractive index than the rod for realising the inner cladding region (and the core). The inner cladding region and the core may naturally also be fabricated by various combinations of tubes and/or rods.

A further advantage of using a non-zero Δ_{clad} relates to cladding pumped fibres having a large active core. Fig. 19 shows the index difference, Δ_{core}, between an active core 320 and the background material of the inner cladding 321. In a preferred embodiment, the fibre uses inner cladding features 322 to confine light in the core using PBG effects as previously described. In preferred embodiments, Δ_{core} is about zero and in other preferred embodiments, Δ_{core} may be negative. A low (or negative) Δ_{core} allows use of very large active cores of more than 15 µm in diameter while single mode operation for at least the signal wavelength is obtained. As dopants for realizing active cores (such as for example Er, Yb, or other rare earth elements or combinations of these) and optional co-dopants (such as for example Al, Ge, and/or La) may increase the refractive index compared to pure silica, it is preferred to use a background material in the inner cladding region with a raised refractive index - for example using Ge-doped silica. While this may provide Δcore of about zero, a Δ_{clad} value above zero may be obtained at the same time. Hence, in a preferred embodiment, the present invention provides an optical fibre laser or amplifier for visible or near-infrared wavelengths comprising an active core comprising Er and/or Yb having a diameter of more than 15 µm, and inner cladding region comprising a Ge-doped silica background material and number of voids having d/Λ of about 0.35 or larger, and an air-clad region comprising a background material (for example pure silica) with a refractive index being lower than that of the inner cladding background material and large voids providing a b-value of less than 1.0 µm, preferably less 2/3 times a free-space pump wavelength (thereby realising an NA of about 0.5 or higher).

## Claims

1. An optical fibre for guiding light, including guiding cladding pump light, the optical fibre having a longitudinal direction and a cross-section perpendicular thereto, the optical fibre comprising:
(a) a core region (52,180,241,250,251,262) comprising an optically active mediumin the form of a rare-earth-doped material; and
(b) a cladding region adjacent to and surrounding said core region, said cladding region comprising:
an inner cladding region (53,102,201), said inner cladding region comprising an inner cladding background material, and having a number of inner cladding features extending in a fibre longitudinal direction and being periodically distributed within said inner cladding region, and exhibiting a photonic band gap to light guided in said core region; and
an outer cladding, said outer cladding comprising:
(i) at least one first outer cladding region surrounding said inner cladding region, said first outer cladding region comprising a first outer cladding background material and a plurality of first outer cladding features (50,51,181,242) extending in a fibre longitudinal direction, said first outer cladding features having a lower refractive index than said first outer cladding background material, and surrounding said core region, and said inner cladding region; and
(ii) at least one further outer cladding region (54,171,172,173,182,240), each of said at least one further outer cladding regions comprising a further outer cladding background material, and surrounding said first outer cladding region,
wherein for a plurality of said first outer cladding features, two nearest neighbouring first outer cladding features have a minimum distance smaller than 1.0 µm, and
wherein the minimum distance between two nearest neighbouring outer cladding features is meant to be the minimum distance between the outer boundaries of two nearest neighbouring cladding features, and
wherein the inner cladding region of the optical fibre is adapted to have a bandgap edge at a frequency within the emission spectrum of the rare-earth ion.

2. An optical fibre according to claim 1 wherein the first outer cladding region in the cross section has an inner diameter or inner cross-sectional dimension being larger than or equal to 15 µm.

3. An optical fibre according to any one of claims 1-2 wherein the inner diameter or inner cross-sectional dimension of the first outer cladding region is larger than or equal to 20 µm.

4. An optical fibre according to any one of claims 1-3 wherein the inner diameter or inner cross-sectional dimension of the first outer cladding region is in the range from 80 µm to 125 µm or in the range from 125 µm to 350 µm.

5. An optical fibre according to any one of claims 1-4 wherein the first outer cladding region in the cross section has an inner diameter or inner cross-sectional dimension being in the range of 5-100 µm.

6. An optical fibre according to any one of claims 1-5 wherein the first outer cladding region in the cross section has an inner diameter or inner cross-sectional dimension being in the range of 30-60 µm.

7. An optical fibre according to any one of claims 1-6 wherein for a plurality of said first outer cladding features, the minimum distance between two nearest neighbouring outer cladding features is smaller than 0.8 µm, preferably smaller than 0.7 µm, more preferably smaller than 0.6 µm, most preferably smaller than 0.5 µm, particularly smaller than 0.4 µm, more particularly smaller than 0.3 µm, most particularly smaller than 0.2 µm.

8. An optical fibre according to any one of claims 1-7 wherein the fibre is capable of guiding at least two predetermined wavelengths, said at least two wavelengths are a pump wavelength and a signal wavelength.

9. An optical fibre according to any one of claims 1-8 wherein the core has a cross-sectional dimension larger than 25 µm, such as larger than 50 µm, such as larger than 75 µm, such as larger than 100 µm, thereby causing the fibre to guide light in multiple modes within the core.

10. An optical fibre according to any one of claims 1-9 wherein for one or more first outer cladding regions the first outer cladding features occupy 45 % or more of the cross-sectional area of the first outer cladding region.

11. An optical fibre according to any one of claims 1-10 wherein for all first outer cladding regions the first outer cladding features occupy 45 % or more of the cross-sectional area of the first outer cladding region.

12. An optical fibre according to any one of claims 1-11 wherein the first outer cladding features occupy at least 50 %, such as at least 60 %, or such as at least 70 % of the cross-sectional area of the first outer cladding.

13. An optical fibre according to any one of claims 1-12 wherein the core comprises a core feature having a lower refractive index than the refractive index of the core material surrounding the core feature.

14. An optical fibre according to any one of claims 1-13 wherein the periodical arrangement of the inner cladding features comprises at least 4 or 5 periods in a radial direction from the centre of the inner cladding.

15. An optical fibre according to any one of claims 1-14 wherein the first outer cladding features are placed in a non-circular symmetric manner.

16. An optical fibre according to any one of claims 1-15 wherein the first outer cladding region in the cross section has a substantially hexagonal like shape.

17. An optical fibre according to any one of claims 1-16 wherein first outer cladding features of different size are present.

18. An optical fibre according to any one of claims 1-17 wherein the first outer cladding features are voids.

19. An optical fibre according to any one of claims 1-18 wherein the first outer cladding features are filled with vacuum, air, a gas, a liquid or a polymer or a combination thereof.

20. An optical fibre according to any one of claims 1-19 wherein the core has a cross-sectional dimension smaller than 10 µm.

21. An optical fibre according to any one of claims 1-20 wherein the core comprises at least one member of the group consisting of Ge, Al, P, Sn and B.

22. An optical fibre according to any one of claims 1-21 wherein the core comprises at least one rare earth selected from the group Er, Yb, Nd, La, Ho, Dy and/or Tm.

23. An optical fibre according to any one of claims 1-22 wherein the fibre has a long period grating or a fibre Bragg grating along at least a part of the fibre length.

24. An optical fibre according to any one of claims 1-23 wherein the fibre comprises a background material being silica, chalcogenide, or another type of glass.

25. An optical fibre according to any one of claims 1-24 wherein the fibre comprises a background material being polymer.

26. An optical fibre according to any one of claims 1-25 wherein the optical fibre is a fibre for a cladding pumped fibre laser or amplifier.

27. An optical fibre according to any one of claims 1-26 in combination with a pump radiation source, wherein for a plurality of said first outer cladding features, two nearest neighbouring first outer cladding features have a minimum distance smaller than the wavelength of the cladding pump light.

28. An optical fibre according to any one of claims 1-27 wherein said optical fibre in the cross-section has a non-uniform shape of the inner cladding region along the fibre length.

29. An optical fibre according to any one of claims 1-28 wherein the first outer cladding features are periodically distributed.

30. An optical fibre according to any one of claims 1-29 wherein said core is adapted for high power broadband amplification.

31. An optical fibre according to any one of claims 1-30 wherein the fibre core material is the same as the background material of the inner cladding region.

32. An optical fibre according to any one of claims 1-31 wherein for a majority or all of said first outer cladding features, the minimum distance between two nearest neighbouring outer cladding features is smaller than 0.6 µm.

33. An optical fibre according to any one of claims 1-32 wherein for a majority or all of said first outer cladding features, the minimum distance between two nearest neighbouring outer cladding features is smaller than 0.5 µm, such as smaller than 0.4 µm, such as smaller than 0.3 µm, or such as smaller than 0.2 µm.

34. An optical fibre according to any one of claims 1-33 wherein the further outer cladding region is made of a homogeneous material.

35. An optical fibre according to any one of claims 1-34 wherein the largest cross-sectional dimension of the first outer cladding features is equal to or below 10 µm.

36. An optical fibre according to any one of claims 1-35 wherein the largest cross-sectional dimension of the first outer cladding features is equal to or below 3 µm.

37. An optical fibre according to any one of claims 1-36 wherein the inner cladding comprises a background material and a plurality of features, said features having a refractive index being higher or lower than the refractive index of the background material.

38. An optical fibre according to any one of claims 1-37 wherein the inner cladding features have a lower index than the refractive index of the background material.

39. An optical fibre according to any one of claims 1-38 wherein the inner cladding features are voids.

40. An optical fibre according to any one of claims 1-39 wherein the inner cladding features are filled with vacuum, air, a gas, a liquid or a polymer or a combination thereof.

41. An optical fibre according to any one of claims 1-40 wherein the inner cladding features have a lower index than the refractive index of the background material, and the inner cladding features have a cross-sectional diameter or dimension in the range of 0.3-0.6 times, preferably 0.3-0.5 times, more preferably 0.2-0.3 times, and most preferably 0.22-0.28 times a centre-to-centre spacing between neighbouring inner cladding features.

42. An optical fibre according to any one of claims 1-41 wherein the core comprises one or more dopants for raising or lowering the refractive index above the refractive index of the background material of the inner cladding.

43. An optical fibre according to any one of claims 1-42 wherein the outer diameter of the inner cladding is within the range from 60-400 µm, or within the range from 200-400 µm.

44. An optical fibre according to any one of claims 1-43 wherein the optical fibre has a length with a first end and a second end, and wherein the cross-sectional area of the first outer cladding features in the first end are larger than any cross-sectional area of first outer cladding features in the second end.

45. An optical fibre according to any one of claims 1-44 wherein the second end comprises no first outer cladding features, or wherein the first outer cladding features are fully collapsed in the second end.

46. An optical fibre according to any one of claims 1-45 wherein the background material surrounding the first outer cladding features or the bridging material filling the area between neighbouring first outer cladding features has a lower refractive index than the refractive index of the background material of the inner cladding.

47. An optical fibre according to any one of claims 1-46 wherein the background material surrounding the first outer cladding features or the bridging material filling the area between neighbouring first outer cladding features has a lower refractive index being less than 4 % lower than the refractive index of the background material of the inner cladding, such as less than 3 % lower, such as 2 % lower, such as 1 % lower.

48. An optical fibre according to any one of claims 1-47 wherein the core has a refractive index being less than 1.0 % different from the refractive index of the background material of the inner cladding, such as less than 0.5 % different, such as less than 0.2 % different, such as less than 0.1 % different, such as less than 0.05 % different.

49. An optical fibre according to any one of claims 1-48 wherein the core has a refractive index being equal to or higher than the refractive index of the background material of the inner cladding.

50. An optical fibre according to any one of claims 1-48 wherein the core has a refractive index being equal to or lower than the refractive index of the background material of the inner cladding.

51. Use of an optical fibre as defined in claim 1-50 in an optical laser, optical amplifier, or endoscope.

52. Use according to claim 51 wherein said optical laser is a high-power lasers, preferably a cladding pumped laser.

53. Article comprising an optical fibre as defined in claims 1-50 in combination with a pump radiation source, wherein for a plurality of said first outer cladding features, two nearest neighbouring first outer cladding features have a minimum distance smaller than the wavelength light emitted from said pump radiation source.

54. An article according to claim 53, wherein for a plurality of said first outer cladding features the minimum distance between two nearest neighbouring outer cladding features is smaller than 0.5 µm

55. An article according to claim 53, wherein said optical fibre of said article is arranged to be optically pumped bi-directionally.

## Patentansprüche

1. Lichtleitfaser zum Führen von Licht einschließlich des Führens von Mantelpumpenlicht, wobei die Lichtleitfaser eine Längsrichtung sowie einen dazu senkrechten Querschnitt aufweist, wobei die Lichtleitfaser umfaßt:
(a) einen Kernbereich (52, 180, 241, 250, 251, 262), umfassend ein optisch aktives Medium in Form eines mit Seltenerdelementen dotierten Materials, und
(b) einen am Kernbereich anliegenden und diesen umgebenden Mantelbereich, wobei der Mantelbereich umfaßt:
einen inneren Mantelbereich (53, 102, 201), umfassend ein inneres Mantelhintergrundmaterial, wobei der innere Mantelbereich eine Anzahl von inneren Mantelausprägungen aufweist, die in einer Längsrichtung der Faser verlaufen und die innerhalb des inneren Mantelbereichs periodisch verteilt sind, und für das im Kernbereich geführte Licht eine photonische Bandlücke ausprägt, und
einen äußeren Mantel, umfassend:
(i) zumindest einen den inneren Mantelbereich umgebenden ersten äußeren Mantelbereich, wobei der erste äußere Mantelbereich ein erstes äußeres Mantelhintergrundmaterial und mehrere erste äußere Mantelausprägungen (50, 51, 181, 242) aufweist, die in einer Längsrichtung der Faser verlaufen, wobei die ersten äußeren Mantelausprägungen einen geringeren Brechungsindex als das erste äußere Mantelhintergrundmaterial aufweisen und den Kernbereich und den inneren Mantelbereich umgeben, und
(ii) zumindest einen weiteren äußeren Mantelbereich (54, 171, 172, 173, 182, 240), wobei dieser äußere Mantelbereich bzw. jeder der mehreren äußeren Mantelbereiche ein weiteres äußeres Mantelhintergrundmaterial umfaßt und den ersten äußeren Mantelbereich umgibt,
wobei die zwei einander am nächsten benachbarten ersten äußeren Mantelausprägungen für mehrere der ersten äußeren Mantelausprägungen einen minimalen Abstand haben, der kleiner als 1,0 µm ist, und wobei der minimale Abstand zwischen zwei einander am nächsten benachbarten äußeren Mantelausprägungen den minimalen Abstand zwischen den Außengrenzen der zwei einander am nächsten benachbarten Mantelausprägungen bezeichnet, und
wobei der innere Mantelbereich der Lichtleitfaser dazu ausgelegt ist, eine Bandlückenflanke bei einer Frequenz innerhalb des Emissionsspektrums des Seltenerdions aufzuweisen.

2. Lichtleitfaser nach Anspruch 1, wobei der erste äußere Mantelbereich im Querschnitt einen Innendurchmesser oder eine innere Querschnittsabmessung hat, die größer oder gleich 15 µm ist.

3. Lichtleitfaser nach einem der Ansprüche 1 bis 2, wobei der Innendurchmesser oder die innere Querschnittsabmessung des ersten äußeren Mantelbereichs größer oder gleich 20 µm ist.

4. Lichtleitfaser nach einem der Ansprüche 1 bis 3, wobei der Innendurchmesser oder die innere Querschnittsabmessung des ersten äußeren Mantelbereichs im Bereich von 80 µm bis 125 µm oder im Bereich von 125 µm bis 350 µm liegt.

5. Lichtleitfaser nach einem der Ansprüche 1 bis 4, wobei der erste äußere Mantelbereich im Querschnitt einen Innendurchmesser oder eine innere Querschnittsabmessung im Bereich von 5 bis 100 µm hat.

6. Lichtleitfaser nach einem der Ansprüche 1 bis 5, wobei der erste äußere Mantelbereich im Querschnitt einen Innendurchmesser oder eine innere Querschnittsabmessung im Bereich von 30 bis 60 µm hat.

7. Lichtleitfaser nach einem der Ansprüche 1 bis 6, wobei der minimale Abstand zwischen zwei einander am nächsten benachbarten äußeren Mantelausprägungen für mehrere der ersten äußeren Mantelausprägungen kleiner als 0,8 µm ist, vorzugsweise kleiner als 0, 7 µm, besser kleiner als 0, 6 µm, noch besser kleiner als 0,5 µm, insbesondere kleiner als 0,4 µm, insbesondere noch kleiner als 0,3 µm, darüber hinaus insbesondere kleiner als 0,2 µm.

8. Lichtleitfaser nach einem der Ansprüche 1 bis 7, wobei die Faser in der Lage ist, mindestens zwei vorgegebene Wellenlängen zu führen, wobei die mindestens zwei Wellenlängen eine Pumpenwellenlänge und eine Signalwellenlänge sind.

9. Lichtleitfaser nach einem der Ansprüche 1 bis 8, wobei der Kern eine Querschnittsabmessung hat, die größer als25µm ist, sowie größer als 50 µm, sowie größer als 75 µm, sowie größer als 100 µm, was die Faser das Licht in mehrfachen Moden innerhalb des Kerns führen läßt.

10. Lichtleitfaser nach einem der Ansprüche 1 bis 9, wobei für einen oder mehrere der ersten äußeren Mantelbereiche die ersten äußeren Mantelausprägungen 45 % oder mehr der Querschnittsfläche des ersten äußeren Mantelbereichs belegen.

11. Lichtleitfaser nach einem der Ansprüche 1 bis 10, wobei für alle ersten äußeren Mantelbereiche die ersten äußeren Mantelausprägungen 45 % oder mehr der Querschnittsfläche des ersten äußeren Mantelbereichs belegen.

12. Lichtleitfaser nach einem der Ansprüche 1 bis 11, wobei die ersten äußeren Mantelausprägungen mindestens 50 %, sowie mindestens 60 %, sowie mindestens 70%, der Querschnittsfläche des ersten äußeren Mantels belegen.

13. Lichtleitfaser nach einem der Ansprüche 1 bis 12, wobei der Kern eine Kernausprägung umfaßt, die einen geringeren Brechungsindex hat als der des die Kernausprägung umgebenden Kernmaterials.

14. Lichtleitfaser nach einem der Ansprüche 1 bis 13, wobei die periodische Anordnung der inneren Mantelausprägungen mindestens 4 oder 5 Perioden in einer radialen Richtung vom Mittelpunkt des inneren Mantels aus umfaßt.

15. Lichtleitfaser nach einem der Ansprüche 1 bis 14, wobei die ersten äußeren Mantelausprägungen in einer nicht-kreisförmigen symmetrischen Weise angeordnet sind.

16. Lichtleitfaser nach einem der Ansprüche 1 bis 15, wobei der erste äußere Mantelbereich im Querschnitt eine im wesentlichen hexagonartige Form aufweist.

17. Lichtleitfaser nach einem der Ansprüche 1 bis 16, wobei erste äußere Mantelausprägungen von verschiedener Größe vorhanden sind.

18. Lichtleitfaser nach einem der Ansprüche 1 bis 17, wobei die ersten äußeren Mantelausprägungen Lücken sind.

19. Lichtleitfaser nach einem der Ansprüche 1 bis 18, wobei die ersten äußeren Mantelausprägungen gefüllt sind mit Vakuum, Luft, einem Gas, einer Flüssigkeit oder einem Polymer oder einer Kombination davon.

20. Lichtleitfaser nach einem der Ansprüche 1 bis 19, wobei der Kern eine Querschnittsabmessung hat, die kleiner als 10 µm ist.

21. Lichtleitfaser nach einem der Ansprüche 1 bis 20, wobei der Kern mindestens ein Element aus der Gruppe von Ge, Al, P, Sn und B umfaßt.

22. Lichtleitfaser nach einem der Ansprüche 1 bis 21, wobei der Kern mindestens ein Seltenerdelement umfaßt, das aus der Gruppe Er, Yb, Nd, La, Ho, Dy und/oder Tm ausgewählt wird.

23. Lichtleitfaser nach einem der Ansprüche 1 bis 22, wobei die Faser ein langes Periodengitter oder ein Fiber-Bragg-Grating zumindest entlang eines Teils der Faserlänge aufweist.

24. Lichtleitfaser nach einem der Ansprüche 1 bis 23, wobei die Faser ein Hintergrundmaterial umfaßt, das Silicium, Chalcogenid oder eine andere Glasart ist.

25. Lichtleitfaser nach einem der Ansprüche 1 bis 24, wobei die Faser ein Hintergrundmaterial umfaßt, das polymer ist.

26. Lichtleitfaser nach einem der Ansprüche 1 bis 25, wobei die Lichtleitfaser eine Faser für einen Faserlaser oder -verstärker mit Mantelpumpe ist.

27. Lichtleitfaser nach einem der Ansprüche 1 bis 26 in Kombination mit einer Pumpstrahlungsquelle, wobei zwei einander am nächsten benachbarte erste äußere Mantelausprägungen für mehrere der ersten äußeren Mantelausprägungen einen minimalen Abstand aufweisen, der kleiner als die Wellenlänge des Mantelpumpenlichts ist.

28. Lichtleitfaser nach einem der Ansprüche 1 bis 27, wobei die Lichtleitfaser im Querschnitt eine unregelmäßige Form des inneren Mantelbereichs entlang der Faserlänge aufweist.

29. Lichtleitfaser nach einem der Ansprüche 1 bis 28, wobei die ersten äußeren Mantelausprägungen periodisch verteilt sind.

30. Lichtleitfaser nach einem der Ansprüche 1 bis 29, wobei der Kern für Hochleistungsbreitbandverstärkung ausgelegt ist.

31. Lichtleitfaser nach einem der Ansprüche 1 bis 30, wobei das Faserkernmaterial das gleiche ist wie das Hintergrundmaterial des inneren Mantelbereichs.

32. Lichtleitfaser nach einem der Ansprüche 1 bis 31, wobei für eine Mehrheit oder für alle der ersten äußeren Mantelausprägungen der minimale Abstand zwischen zwei einander am nächsten benachbarten äußeren Mantelausprägungen kleiner als 0,6 µm ist.

33. Lichtleitfaser nach einem der Ansprüche 1 bis 32, wobei für eine Mehrheit oder für alle der ersten äußeren Mantelausprägungen der minimale Abstand zwischen zwei einander am nächsten benachbarten äußeren Mantelausprägungen kleiner als 0,5 µm ist, sowie kleiner als 0,4 µm, sowie kleiner als 0,3 µm oder kleiner als 0,2 µm ist.

34. Lichtleitfaser nach einem der Ansprüche 1 bis 33, wobei der weitere äußere Mantelbereich aus einem homogenen Material hergestellt ist.

35. Lichtleitfaser nach einem der Ansprüche 1 bis 34, wobei die größte Querschnittsabmessung der ersten äußeren Mantelausprägungen kleiner oder gleich 10 µm ist.

36. Lichtleitfaser nach einem der Ansprüche 1 bis 35, wobei die größte Querschnittsabmessung der ersten äußeren Mantelausprägungen kleiner oder gleich 3 µm ist.

37. Lichtleitfaser nach einem der Ansprüche 1 bis 36, wobei der innere Mantel ein Hintergrundmaterial und mehrere Ausprägungen umfaßt, wobei die Ausprägungen einen Brechungsindex haben, der höher oder niedriger als der Brechungsindex des Hintergrundmaterials ist.

38. Lichtleitfaser nach einem der Ansprüche 1 bis 37, wobei die inneren Mantelausprägungen einen geringeren Index haben als der Brechungsindex des Hintergrundmaterials.

39. Lichtleitfaser nach einem der Ansprüche 1 bis 38, wobei die inneren Mantelausprägungen Lücken sind.

40. Lichtleitfaser nach einem der Ansprüche 1 bis 39, wobei die inneren Mantelausprägungen gefüllt sind mit Vakuum, Luft, einem Gas, einer Flüssigkeit oder einem Polymer oder einer Kombination davon.

41. Lichtleitfaser nach einem der Ansprüche 1 bis 40, wobei die inneren Mantelausprägungen einen geringeren Index haben als der Brechungsindex des Hintergrundmaterials und wobei die inneren Mantelausprägungen einen Querschnittsdurchmesser oder eine Querschnittsabmessung im Bereich des 0,3-0,6-fachen, vorzugsweise des 0,3-0,5-fachen, darüber hinaus vorzugsweise des 0,2-0,3-fachen und besonders vorzugsweise des 0,22-0,28-fachen eines Mittelpunkt-zu-Mittelpunkt-Abstands zwischen benachbarten inneren Mantelausprägungen aufweisen.

42. Lichtleitfaser nach einem der Ansprüche 1 bis 41, wobei der Kern eine oder mehrere Dotiersubstanzen zum Anheben oder Absenken des Brechungsindex über den Brechungsindex des Hintergrundmaterials des inneren Mantels umfaßt.

43. Lichtleitfaser nach einem der Ansprüche 1 bis 42, wobei der Außendurchmesser des inneren Mantels im Bereich von 60 bis 400 µm oder innerhalb des Bereichs von 200 bis 400 µm liegt.

44. Lichtleitfaser nach einem der Ansprüche 1 bis 43, wobei die Lichtleitfaser eine Längenausdehnung mit einem ersten und einem zweiten Ende hat und wobei die Querschnittsfläche der ersten äußeren Mantelausprägungen im ersten Ende größer sind als jede Querschnittsfläche von ersten äußeren Mantelausprägungen im zweiten Ende.

45. Lichtleitfaser nach einem der Ansprüche 1 bis 44, wobei das zweite Ende keine ersten äußeren Mantelausprägungen aufweist oder wobei die ersten äußeren Mantelausprägungen im ersten Ende vollständig zerfallen sind.

46. Lichtleitfaser nach einem der Ansprüche 1 bis 45, wobei das Hintergrundmaterial, das die ersten äußeren Mantelausprägungen umgibt, oder das Brückenmaterial, das die Fläche zwischen benachbarten ersten äußeren Mantelausprägungen füllt, einen geringeren Brechungsindex aufweist als das Hintergrundmaterial des inneren Mantels.

47. Lichtleitfaser nach einem der Ansprüche 1 bis 46, wobei das Hintergrundmaterial, das die ersten äußeren Mantelausprägungen umgibt, oder das Brückenmaterial, das die Fläche zwischen benachbarten ersten äußeren Mantelausprägungen füllt, einen geringeren Brechungsindex aufweist, der weniger als 4 % niedriger als der Brechungsindex des Hintergrundmaterials des inneren Mantels ist, sowie weniger als 3 % niedriger, sowie weniger als 2 % niedriger, sowie weniger als 1 % niedriger.

48. Lichtleitfaser nach einem der Ansprüche 1 bis 47, wobei der Kern einen Brechungsindex aufweist, der sich um weniger als 1,0 % vom Brechungsindex des Hintergrundmaterials des inneren Mantels unterscheidet, sowie um weniger als 0,5 %, sowie um weniger als 0,2 %, sowie um weniger als 0,1 %, sowie um weniger als 0,05 %.

49. Lichtleitfaser nach einem der Ansprüche 1 bis 48, wobei der Kern einen Brechungsindex aufweist, der größer oder gleich dem Brechungsindex des Hintergrundmaterials des inneren Mantels ist.

50. Lichtleitfaser nach einem der Ansprüche 1 bis 48, wobei der Kern einen Brechungsindex aufweist, der kleiner oder gleich dem Brechungsindex des Hintergrundmaterials des inneren Mantels ist.

51. Verwendung einer nach Anspruch 1 bis 50 definierten Lichtleitfaser in einem optischen Laser, einem optischen Verstärker oder einem Endoskop.

52. Verwendung nach Anspruch 51, wobei der optische Laser ein Hochleistungslaser ist, vorzugsweise ein Laser mit Mantelpumpe.

53. Gegenstand umfassend eine wie in Anspruch 1 bis 50 definierte Lichtleitfaser in Kombination mit einer Pumpstrahlungsquelle, wobei zwei einander am nächsten benachbarte erste äußere Mantelausprägungen für mehrere der ersten äußeren Mantelausprägungen einen minimalen Abstand haben, der kleiner als die Wellenlänge des aus der Pumpstrahlungsquelle emittierten Lichts ist.

54. Gegenstand nach Anspruch 53, wobei der minimale Abstand zwischen zwei einander am nächsten benachbarten äußeren Mantelausprägungen für mehrere der ersten äußeren Mantelausprägungen kleiner als 0,5 µm ist.

55. Gegenstand nach Anspruch 53, wobei die Lichtleitfaser des Gegenstands dazu ausgelegt ist, optisch in beide Richtungen gepumpt zu werden.

## Revendications

1. Fibre optique destinée à guider une lumière, incluant à guider une lumière de pompage par la gaine, la fibre optique ayant une direction longitudinale et une section transversale perpendiculaire à celle-ci, la fibre optique comprenant :
a) une région de noyau (52, 180, 241, 250, 251, 262) comprenant un milieu optiquement actif sous la forme d'un matériau dopé aux terres rares ; et
b) une région de gaine, adjacente à et entourant ladite région de noyau, ladite région de gaine comprenant :
• une région de gaine intérieure (53, 102, 201), ladite région de gaine intérieure comprenant un matériau de fond de gaine intérieure et ayant un certain nombre de parties caractéristiques de gaine intérieure s'étendant dans une direction longitudinale de fibre et étant distribuées périodiquement à l'intérieur de ladite région de gaine intérieure, et présentant une bande interdite photonique à la lumière guidée dans ladite région de noyau ; et
• une gaine extérieure, ladite gaine extérieure comprenant :
(i) au moins une première région de gaine extérieure entourant ladite région de gaine intérieure, ladite première région de gaine extérieure comprenant un premier matériau de fond de gaine extérieure et une pluralité de premières parties caractéristiques de gaine extérieure (50, 51, 181, 242) s'étendant dans une direction longitudinale de fibre, lesdites parties caractéristiques de gaine extérieure ayant un indice de réfraction inférieur à celui du premier matériau de fond de gaine extérieure, et entourant ladite région de noyau et ladite région de gaine intérieure ; et
(ii) au moins une région de gaine extérieure (54, 171, 172, 173, 182, 240) supplémentaire, chacune desdites au moins une régions de gaine extérieure supplémentaires comprenant un matériau de fond de gaine extérieure supplémentaire, et entourant ladite première région de gaine extérieure,
• dans laquelle, pour une pluralité desdites premières parties caractéristiques de gaine extérieure, deux parties caractéristiques de gaine extérieure premières voisines ont une distance minimale inférieure à 1,0 µm, et dans laquelle la distance minimale entre deux parties caractéristiques de gaine extérieure voisines est censée être la distance minimale entre les frontières extérieures des deux parties caractéristiques de gaine voisines, et
• dans laquelle la région de gaine intérieure de la fibre optique est adaptée pour avoir un bord de bande interdite à une fréquence à l'intérieur du spectre d'émission de l'ion de terre rare.

2. Fibre optique selon la revendication 1, dans laquelle la région de première gaine extérieure dans la section transversale a un diamètre intérieur ou une dimension intérieure de section transversale étant supérieure ou égale à 15 µm.

3. Fibre optique selon l'une quelconque des revendications 1 à 2, dans laquelle le diamètre intérieur, ou la dimension intérieure de section transversale, de la région de première gaine extérieure est supérieure ou égale à 20 µm.

4. Fibre optique selon l'une quelconque des revendications 1 à 3, dans laquelle le diamètre intérieur, ou la dimension intérieure de section transversale, de la région de première gaine extérieure se situe dans la plage de 80 µm à 125 µm ou dans la plage de 125 µm à 350 µm.

5. Fibre optique selon l'une quelconque des revendications 1 à 4, dans laquelle la région de première gaine extérieure dans la section transversale a un diamètre intérieur ou une dimension intérieure de section transversale se situant dans la plage de 5 à 100 µm.

6. Fibre optique selon l'une quelconque des revendications 1 à 5, dans laquelle la région de première gaine extérieure dans la section transversale a un diamètre intérieur ou une dimension intérieure de section transversale se situant dans la plage de 30 à 60 µm.

7. Fibre optique selon l'une quelconque des revendications 1 à 6, dans laquelle, pour une pluralité desdites parties caractéristiques de première gaine extérieure, la distance minimale entre deux parties caractéristiques de gaine extérieure premières voisines est inférieure à 0,8 µm, de préférence inférieure à 0,7 µm, plus préférentiellement inférieure à 0,6 µm, le plus préférentiellement inférieure à 0,5 µm, particulièrement inférieure à 0,4 µm, plus particulièrement inférieure à 0,3 µm et le plus particulièrement inférieure à 0,2 µm.

8. Fibre optique selon l'une quelconque des revendications 1 à 7, dans laquelle la fibre est capable de guider au moins deux longueurs d'ondes prédéterminées, lesdites au moins deux longueurs d'ondes étant une longueur d'onde de pompage et une longueur d'onde de signal.

9. Fibre optique selon l'une quelconque des revendications 1 à 8, dans laquelle le noyau a une dimension de section transversale supérieure à 25 µm, telle que supérieure à 50 µm, telle que supérieure à 75 µm, telle que supérieure à 100 µm, faisant de ce fait en sorte que la fibre guide la lumière dans des modes multiples à l'intérieur du noyau.

10. Fibre optique selon l'une quelconque des revendications 1 à 9, dans laquelle, pour une ou plusieurs des régions de première gaine extérieure, les parties caractéristiques de première gaine extérieure occupent 45 % ou davantage de la superficie de section transversale de la région de première gaine extérieure.

11. Fibre optique selon l'une quelconque des revendications 1 à 10, dans laquelle, pour toutes les régions de première gaine extérieure, les parties caractéristiques de première gaine extérieure occupent 45 % ou davantage de la superficie de section transversale de la région de première gaine extérieure.

12. Fibre optique selon l'une quelconque des revendications 1 à 11, dans laquelle les parties caractéristiques de première gaine extérieure occupent au moins 50 %, tel qu'au moins 60 % ou tel qu'au moins 70 % de la superficie de section transversale de la première gaine extérieure.

13. Fibre optique selon l'une quelconque des revendications 1 à 12, dans laquelle le noyau comprend une partie caractéristique de noyau ayant un indice de réfraction inférieur à l'indice de réfraction du matériau de noyau entourant la partie caractéristique.

14. Fibre optique selon l'une quelconque des revendications 1 à 13, dans laquelle la disposition périodique des parties caractéristiques de gaine intérieure comprend au moins 4 ou 5 périodes dans une direction radiale à partir du centre de la gaine intérieure.

15. Fibre optique selon l'une quelconque des revendications 1 à 14, dans laquelle les parties caractéristiques de première gaine extérieure sont placées de manière symétrique non circulaire.

16. Fibre optique selon l'une quelconque des revendications 1 à 15, dans laquelle la région de première gaine extérieure dans la section transversale a une forme sensiblement hexagonale.

17. Fibre optique selon l'une quelconque des revendications 1 à 16, dans laquelle des parties caractéristiques de première gaine extérieure de tailles différentes sont présentes.

18. Fibre optique selon l'une quelconque des revendications 1 à 17, dans laquelle les parties caractéristiques de première gaine extérieure sont des espaces vides.

19. Fibre optique selon l'une quelconque des revendications 1 à 18, dans laquelle les parties caractéristiques de première gaine extérieure sont remplies de vide, d'air, d'un gaz, d'un liquide ou d'un polymère ou d'une combinaison de ceux-ci.

20. Fibre optique selon l'une quelconque des revendications 1 à 19, dans laquelle le noyau a une dimension de section transversale inférieure à 10 µm.

21. Fibre optique selon l'une quelconque des revendications 1 à 20, dans laquelle le noyau comprend au moins un élément du groupe composé de Ge, d'Al, de P, de Sn et de B.

22. Fibre optique selon l'une quelconque des revendications 1 à 21, dans laquelle le noyau comprend au moins une terre rare sélectionnée à partir du groupe d'Er, d'Yb, de Nd, de La, d'Ho, de Dy et/ou de Tm.

23. Fibre optique selon l'une quelconque des revendications 1 à 22, dans laquelle la fibre a un réseau de période longue ou un réseau de Bragg de fibre le long d'au moins une partie de la longueur de fibre.

24. Fibre optique selon l'une quelconque des revendications 1 à 23, dans laquelle la fibre comprend un matériau de fond étant la silice, une chalcogénure ou un autre type de verre.

25. Fibre optique selon l'une quelconque des revendications 1 à 24, dans laquelle la fibre comprend un matériau de fond étant un polymère.

26. Fibre optique selon l'une quelconque des revendications 1 à 25, dans laquelle la fibre optique est une fibre destinée à un laser ou amplificateur de fibre à pompage par la gaine.

27. Fibre optique selon l'une quelconque des revendications 1 à 26, en combinaison avec une source de rayonnement de pompage, dans laquelle, pour une pluralité desdites parties caractéristiques de première gaine extérieure, deux parties caractéristiques de première gaine extérieure premières voisines ont une distance minimale inférieure à la longueur d'onde de la lumière de pompage par la gaine.

28. Fibre optique selon l'une quelconque des revendications 1 à 27, dans laquelle ladite fibre optique dans la section transversale a une forme non uniforme de la région de gaine intérieure le long de la longueur de fibre.

29. Fibre optique selon l'une quelconque des revendications 1 à 28, dans laquelle les parties caractéristiques de première gaine extérieure sont distribuées de façon périodique.

30. Fibre optique selon l'une quelconque des revendications 1 à 29, dans laquelle ledit noyau est adapté pour une amplification à large bande de haute puissance.

31. Fibre optique selon l'une quelconque des revendications 1 à 30, dans laquelle le matériau de noyau de fibre est le même que le matériau de fond de la région de gaine intérieure.

32. Fibre optique selon l'une quelconque des revendications 1 à 31, dans laquelle, pour une majorité des parties caractéristiques, ou toutes les parties caractéristiques, de première gaine extérieure, la distance minimale entre deux parties caractéristiques de gaine extérieure premières voisines est inférieure à 0,6 µm.

33. Fibre optique selon l'une quelconque des revendications 1 à 32, dans laquelle, pour une majorité desdites parties caractéristiques, ou toutes lesdites parties caractéristiques, de première gaine extérieure, la distance minimale entre deux parties caractéristiques de gaine extérieure premières voisines est inférieure à 0,5 µm, telle qu'inférieure à 0,4 µm, telle qu'inférieure à 0,3 µm, ou telle qu'inférieure à 0,2 µm.

34. Fibre optique selon l'une quelconque des revendications 1 à 33, dans laquelle la région de gaine extérieure supplémentaire est fabriquée d'un matériau homogène.

35. Fibre optique selon l'une quelconque des revendications 1 à 34, dans laquelle la dimension de section transversale la plus grande des parties caractéristiques de première gaine extérieure est égale ou inférieure à 10 µm.

36. Fibre optique selon l'une quelconque des revendications 1 à 35, dans laquelle la dimension de section transversale la plus grande des parties caractéristiques de première gaine extérieure est égale ou inférieure à 3 µm.

37. Fibre optique selon l'une quelconque des revendications 1 à 36, dans laquelle la gaine intérieure comprend un matériau de fond et une pluralité de parties caractéristiques, lesdites parties caractéristiques ayant un indice de réfraction étant supérieur ou inférieur à l'indice de réfraction du matériau de fond.

38. Fibre optique selon l'une quelconque des revendications 1 à 37, dans laquelle les parties caractéristiques de gaine intérieure ont un indice de réfraction inférieur à l'indice de réfraction du matériau de fond.

39. Fibre optique selon l'une quelconque des revendications 1 à 38, dans laquelle les parties caractéristiques de gaine intérieure sont des espaces vides.

40. Fibre optique selon l'une quelconque des revendications 1 à 39, dans laquelle les parties caractéristiques de gaine intérieure sont remplies de vide, d'air, d'un gaz, d'un liquide ou d'un polymère ou d'une combinaison de ceux-ci.

41. Fibre optique selon l'une quelconque des revendications 1 à 40, dans laquelle les parties caractéristiques de gaine intérieure ont un indice de réfraction inférieur à l'indice de réfraction du matériau de fond, et les parties caractéristiques de gaine intérieure ont un diamètre, ou une dimension, de section transversale dans la plage de 0,3 à 0,6 fois, de préférence de 0,3 à 0,5 fois, plus préférentiellement de 0,2 à 0,3 fois et le plus préférentiellement de 0,22 à 0,28 fois un espacement de centre à centre entre parties caractéristiques de gaine intérieure voisines.

42. Fibre optique selon l'une quelconque des revendications 1 à 41, dans laquelle le noyau comprend un ou plusieurs dopants destinés à augmenter ou à diminuer l'indice de réfraction au-dessus de l'indice de réfraction du matériau de fond de la gaine intérieure.

43. Fibre optique selon l'une quelconque des revendications 1 à 42, dans laquelle le diamètre extérieur de la gaine intérieure se situe à l'intérieur de plage de 60 à 400 µm, ou à l'intérieur de la plage de 200 à 400 µm.

44. Fibre optique selon l'une quelconque des revendications 1 à 43, dans laquelle la fibre optique a une longueur ayant une première et une deuxième extrémités, et dans laquelle la superficie de section transversale des parties caractéristiques de première gaine extérieure dans la première extrémité est plus grande qu'une superficie de section transversale quelconque des parties caractéristiques de première gaine extérieure dans la deuxième extrémité.

45. Fibre optique selon l'une quelconque des revendications 1 à 44, dans laquelle la deuxième extrémité ne comprend aucune partie caractéristique de première gaine extérieure, ou dans laquelle les parties caractéristiques de première gaine extérieure sont complètement écrasées dans la deuxième extrémité.

46. Fibre optique selon l'une quelconque des revendications 1 à 45, dans laquelle le matériau de fond entourant les parties caractéristiques de première gaine extérieure ou le matériau de pontage remplissant la zone entre les parties caractéristiques de première gaine extérieure voisines a un indice de réfraction inférieur à l'indice de réfraction du matériau de fond de la gaine intérieure.

47. Fibre optique selon l'une quelconque des revendications 1 à 46, dans laquelle le matériau de fond entourant les parties caractéristiques de première gaine extérieure or le matériau de pontage remplissant la zone entre les parties caractéristiques de première gaine extérieure voisines a un indice de réfraction inférieur, étant inférieur de moins de 4 % à l'indice de réfraction du matériau de fond de la gaine intérieure, tel qu'inférieur de moins de 3 %, tel qu'inférieur de 2 % ou tel qu'inférieur de 1 %.

48. Fibre optique selon l'une quelconque des revendications 1 à 47, dans laquelle le noyau a un indice de réfraction étant différent de moins de 1 % de l'indice de réfraction du matériau de fond de la gaine intérieure, tel que différent de moins de 0,5 %, tel que différent de moins de 0,2 %, tel que différent de moins de 0,1 % ou tel que différent de moins de 0,05 %.

49. Fibre optique selon l'une quelconque des revendications 1 à 48, dans laquelle le noyau a un indice de réfraction étant égal ou supérieur à l'indice de réfraction du matériau de fond de la gaine intérieure.

50. Fibre optique selon l'une quelconque des revendications 1 à 48, dans laquelle le noyau a un indice de réfraction étant égal ou inférieur à l'indice de réfraction du matériau de fond de la gaine intérieure.

51. Utilisation d'une fibre optique telle que définie dans les revendications 1 à 50 dans un laser optique, un amplificateur optique ou un endoscope.

52. Utilisation selon la revendication 51, dans laquelle ledit laser optique est un laser à haute puissance, de préférence un laser à pompage par la gaine.

53. Article comprenant une fibre optique telle que définie dans les revendications 1 à 50 en combinaison avec une source de rayonnement de pompage, dans lequel, pour une pluralité desdites parties caractéristiques de première gaine extérieure, deux parties caractéristiques de première gaine extérieure premières voisines ont une distance minimale inférieure à celle de la lumière de longueur d'onde émise depuis ladite source de rayonnement de pompage.

54. Article selon la revendication 53, dans lequel, pour une pluralité desdites parties caractéristiques de première gaine extérieure, la distance minimale entre deux parties caractéristiques de gaine extérieure premières voisines est inférieure à 0,5 µm.

55. Article selon la revendication 53, dans lequel ladite fibre optique dudit article est disposée de manière à être pompée de façon bidirectionnelle.
